(19) Europäisches Patentamt
European Patent Office
Office européen des brevets

(11) **EP 4 502 958 A1**

(12) **EUROPEAN PATENT APPLICATION**
published in accordance with Art. 153(4) EPC

(43) Date of publication:
**05.02.2025 Bulletin 2025/06**

(21) Application number: **23779572.9**

(22) Date of filing: **14.03.2023**

(51) International Patent Classification (IPC):
*G06T 19/00* (2011.01)     *A63F 13/52* (2014.01)
*A63F 13/53* (2014.01)     *A63F 13/655* (2014.01)

(52) Cooperative Patent Classification (CPC):
**A63F 13/52; A63F 13/53; A63F 13/655;
G06T 19/00**

(86) International application number:
**PCT/JP2023/009881**

(87) International publication number:
**WO 2023/189554 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022058494**

(71) Applicant: **Sony Group Corporation**
**Tokyo 108-0075 (JP)**

(72) Inventors:
• **HASEGAWA, Yuki**
**Tokyo 108-0075 (JP)**
• **YOKONO, Jun**
**Tokyo 108-0075 (JP)**
• **WATANABE, Sayaka**
**Tokyo 108-0075 (JP)**
• **IWAI, Yoshiaki**
**Tokyo 108-0075 (JP)**
• **WU, Jianing**
**Tokyo 108-0075 (JP)**
• **OHASHI, Takuya**
**Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND PROGRAM**

(57) The present disclosure relates to an information processing device, an information processing method, and a program capable of converting a real space image into a virtual space image by appropriately reflecting a relationship (interaction) with a person or an object in real space.

A real space image including a user and a person or an object around the user is acquired from an imaging device, a relationship (interaction) indicating a motion that the user takes with respect to the person or the object is extracted from the real space image, the user and the person or the object are converted into an avatar and a virtual object in a virtual space on the basis of the relationship, and the real space image is converted and generated into a virtual space image. The present disclosure can be applied to a virtual space display system.

*FIG. 2*

## Description

### TECHNICAL FIELD

The present disclosure relates to an information processing device, an information processing method, and a program, and particularly, to an information processing device, an information processing method, and a program capable of converting a real space image into a virtual space image by appropriately reflecting a relationship with a person or an object in real space.

### BACKGROUND ART

A technology of depicting a user and a situation around the user in real space in a virtual space (virtual reality) image and providing the user with a feeling as if the user has entered the virtual space has been widely used.

Among such technologies, a technology has been proposed in which a real space image is converted into a virtual space image on the basis of the position and posture of a person or an object in real space, thereby improving the feeling (immersion) provided to the user to feel as if the user has entered the virtual space (see Patent Document 1).

### CITATION LIST

### PATENT DOCUMENT

Patent Document 1: Japanese Patent Application Laid-Open No. 2017-199237

### SUMMARY OF THE INVENTION

### PROBLEMS TO BE SOLVED BY THE INVENTION

However, in the technology described in Patent Document 1, a real space image can be converted into a virtual space image according to the position and posture of a person or an object in real space, but the relationship with the person or the object in real space is not reflected in the virtual space image.

The present disclosure has been made in view of such a situation, and in particular, enables conversion of a real space image into a virtual space image by appropriately reflecting a relationship with a person or an object in real space.

### SOLUTIONS TO PROBLEMS

An information processing device and a program according to one aspect of the present disclosure are an information processing device and a program including a relationship extraction unit that extracts a relationship between a user in real space and a person or an object around the user from a real space image including the user and the person or the object, and a virtual space image generation unit that converts the user and the person or the object into an avatar and a virtual object in a virtual space on a basis of the relationship, and converts and generates the real space image into a virtual space image.

An information processing method according to one aspect of the present disclosure is an information processing method including extracting a relationship between a user in real space and a person or an object around the user from a real space image including the user and the person or the object, and converting the user and the person or the object into an avatar and a virtual object in a virtual space on the basis of the relationship, and converting and generating the real space image into a virtual space image.

In one aspect of the present disclosure, a relationship between a user in real space and a person or an object around the user is extracted from a real space image including the user and the person or the object, and the user and the person or the object are converted into an avatar and a virtual object in a virtual space on the basis of the relationship, and the real space image is converted and generated into a virtual space image.

### BRIEF DESCRIPTION OF DRAWINGS

Fig. 1 is a diagram illustrating an outline of the present disclosure.
Fig. 2 is a diagram illustrating an example based on a relationship with a real user.
Fig. 3 is a diagram illustrating an example of conversion of a real space image into a virtual space image based on a shape of a real object.
Fig. 4 is a diagram illustrating an example of conversion of a real space image into a virtual space image based on a state of a real object.
Fig. 5 is a diagram illustrating an example of conversion of a real space image into a virtual space image based on a scene.
Fig. 6 is a diagram illustrating an example of conversion of a real space image into a virtual space image based on a relationship between a user and surrounding persons.
Fig. 7 is a diagram illustrating an example of conversion of a real space image into a virtual space image based on an indirect relationship via a person or an object having a relationship with a user and a relationship with a plurality of real objects.
Fig. 8 is a diagram illustrating an example of conversion of a real space image into a virtual space image in which an item corresponding to a scene is added.
Fig. 9 is a diagram illustrating a configuration example of a virtual space display system of the present disclosure.

Fig. 10 is a hardware block diagram illustrating a hardware configuration example of a virtual space display device of Fig. 9.

Fig. 11 is a functional block diagram illustrating functions implemented by the virtual space display device of Fig. 10.

Fig. 12 is a diagram illustrating functions of a person posture extraction unit.

Fig. 13 is a diagram illustrating functions of an object area extraction unit.

Fig. 14 is a diagram illustrating functions of an interaction extraction unit.

Fig. 15 is a diagram illustrating functions of an object shape extraction unit.

Fig. 16 is a diagram illustrating functions of an object state extraction unit.

Fig. 17 is a diagram illustrating a configuration example of virtual space object data.

Fig. 18 is a diagram illustrating a configuration example of virtual space object data.

Fig. 19 is a diagram illustrating a similarity calculation unit.

Fig. 20 is a diagram illustrating an example of calculation of an object effect by an object effect calculation unit.

Fig. 21 is a diagram illustrating an example of calculation of an object effect by the object effect calculation unit.

Fig. 22 is a flowchart illustrating virtual space display processing.

Fig. 23 is a flowchart illustrating relationship detection processing.

Fig. 24 is a flowchart illustrating virtual space image generation processing.

Fig. 25 illustrates a configuration example of a general-purpose computer.

MODE FOR CARRYING OUT THE INVENTION

Hereinafter, preferred embodiments of the present disclosure will be described in detail with reference to the accompanying drawings. Note that in the present specification and drawings, components having substantially the same functional configuration are denoted by the same reference signs, and redundant description is omitted.

Hereinafter, modes for carrying out the present technology will be described. The description will be given in the following order.

    1. Outline of present disclosure
    2. Preferred embodiment
    3. Example of execution by software

<<1. Outline of present disclosure>>

<Outline of virtual space display system>

In particular, the present disclosure enables conversion of a real space image into a virtual space image by appropriately reflecting a relationship with a person or an object in real space.

Therefore, first, an outline of a virtual space display system that converts a real space image into a virtual space image and displays the virtual space image will be described.

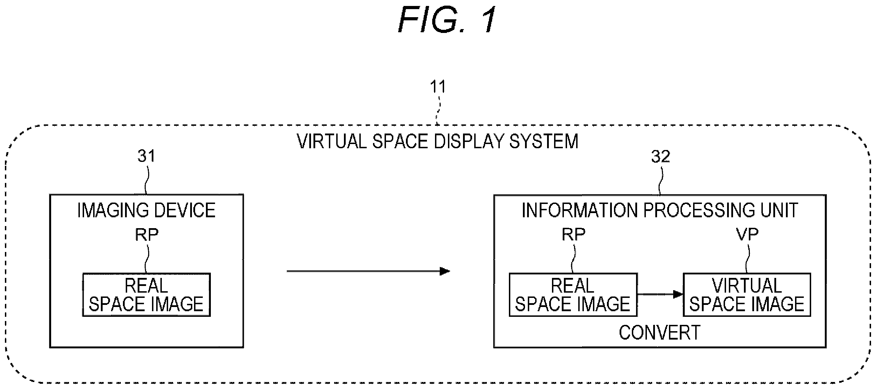

Fig. 1 illustrates a configuration example as an outline of a virtual space display system that acquires a real space image, converts the real space image into a virtual space image, and displays the virtual space image.

A virtual space display system 11 in Fig. 1 includes an imaging device 31 that captures a real space image RP including a user, and an information processing unit 32 that generates a virtual space image VP on the basis of the real space image RP captured by the imaging device 31 and presents the virtual space image VP to the user.

More specifically, the imaging device 31 is a camera or the like, captures real space in which the user exists as the real space image RP, and transmits the real space image RP to the information processing unit 32.

The information processing unit 32 detects mutual relationships between persons and objects around the user, shapes of objects, and states of objects on the basis of the real space image RP transmitted from the imaging device 31.

Then, the information processing unit 32 converts the real space image RP into the virtual space image VP on the basis of the detected mutual relationships (interactions) between persons and objects around the user, the shapes of the objects, the states of the objects, and types of scenes set in advance, displays the virtual space image VP on a display unit (not illustrated), and presents the virtual space image VP to the user.

<Example based on relationship with real user>

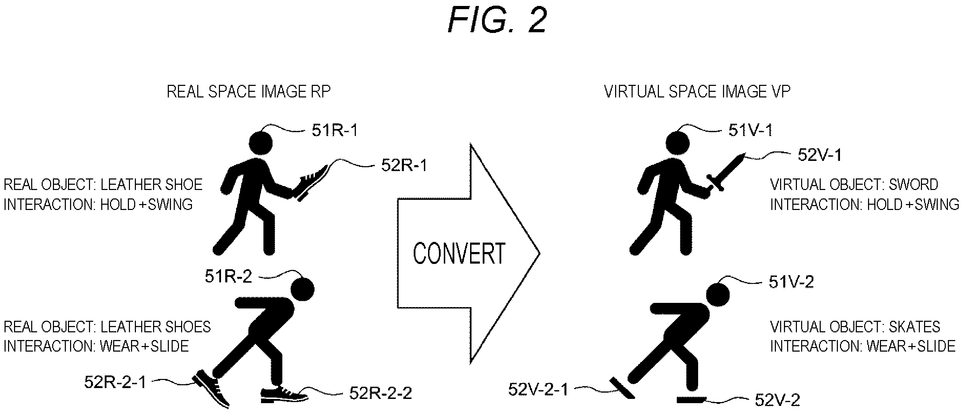

The virtual space image VP generated by being converted from the real space image RP on the basis of a mutual relationship (interaction) between persons and objects in the real space image RP is, for example, as illustrated in Fig. 2. The relationship here can also be said to be a motion in which a person in real space uses an object in real space.

Note that in Figs. 2 to 8, an example of the real space image RP is illustrated in the left part, and an example of the virtual space image VP is illustrated in the right part.

That is, as illustrated in the upper left part of Fig. 2, consider a case where, in the real space image RP, a real user 51R-1 exists and holds a real object 52R-1 which is a leather shoe, and a weapon swinging motion is detected. Note that since a motion can be regarded as a time-series posture change of the real user, here, it is indicated that the time-series posture change of the real user is detected as a swinging motion with a weapon.

In this case, for example, the relationship between the real user 51R-1 and the real object 52R-1 detected when a battle scene is assumed can be regarded as, for example, a hero and a weapon used by the hero.

Therefore, as illustrated in the upper right part of Fig. 2, the information processing unit 32 generates a virtual space image VP by converting the real user 51R-1 and the real object 52R-1 in the real space image RP into a virtual user 51V-1 who is a hero and a virtual object 52V-1 which is a sword as a weapon in the corresponding virtual space.

Furthermore, as illustrated in the lower left part of Fig. 2, consider a case where, in the real space image RP, a real user 51R-2 exists and wears real objects 52R-2-1 and 52R-2-2 which are leather shoes, and a sliding motion like a skate player is detected.

In this case, the real user 51R-2 and the real objects 52R-2-1 and 52R-2-2 detected when a scene of playing sports is assumed, can be regarded as, for example, a skater and skates used by the skater from the relationship.

Therefore, as illustrated in the lower right part of Fig. 2, the information processing unit 32 generates the virtual space image VP by converting the real user 51R-2 and the real objects 52R-2-1 and 52R-2-2 in the real space image RP into a virtual user 51V-2 who is a skater and virtual objects 52V-2-1 and 52V-2-2 which are skates in the corresponding virtual space.

<Example based on shape of real object>

While the example of converting the real space image RP into the virtual space image VP on the basis of the relationship between the real user and the real object based on the motion of the real user using the real object detected from the real space image RP has been described above, an example of converting the real space image RP into the virtual space image VP on the basis of the shape of a real object used by a real user detected from the real space image RP will be described.

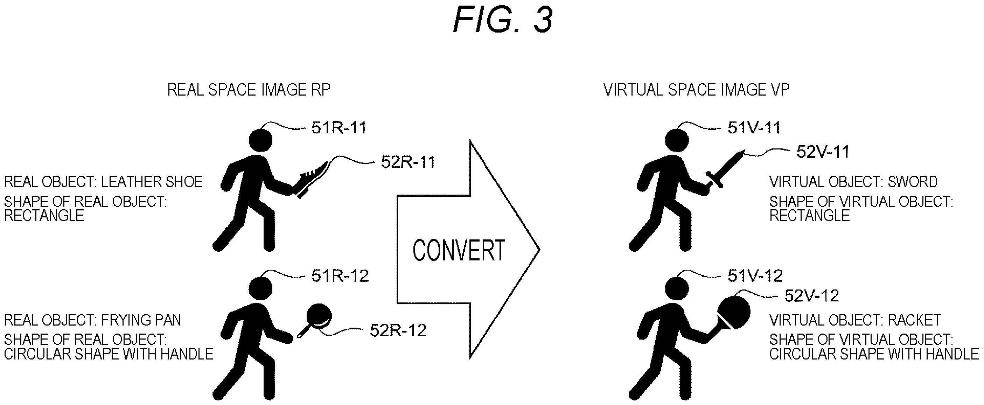

That is, as illustrated in the upper left part of Fig. 3, consider a case where, in the real space image RP, a real user 51R-11 exists, and a situation in which the real user 51R-11 has a real object 52R-11 which is a leather shoe that can be regarded as a rectangle is detected.

In this case, the real user 51R-11 and the real object 52R-11 can be regarded as, for example, a hero and a rectangular weapon used by the hero from the relationship.

Therefore, as illustrated in the upper right part of Fig. 3, the information processing unit 32 generates a virtual space image VP by converting the real user 51R-11 and the real object 52R-11 in the real space image RP into a virtual user 51V-11 who is a hero and a virtual object 52V-11 which is a sword as a weapon similar to a rectangular shape in the corresponding virtual space.

Furthermore, as illustrated in the lower left part of Fig. 3, consider a case where, in the real space image RP, a situation in which a real user 51R-12 holds a real object 52R-12 which is a circular frying pan with a handle is detected.

In this case, the real user 51R-12 and the real object 52R-12 detected when a scene of playing sports is assumed, can be regarded as, for example, a tennis player and a racket having a shape similar to the shape of a frying pan used by the tennis player from the relationship.

Therefore, as illustrated in the lower right part of Fig. 3, the information processing unit 32 generates the virtual space image VP by converting the real user 51R-12 and the real object 52R-12 in the real space image RP into a virtual user 51V-12 who is a tennis player and a virtual object 52V-12 which is a racket held by the virtual user 51V-12 who is a tennis player in the corresponding virtual space.

<Example based on state of real object>

While the example of converting the real space image RP into the virtual space image VP on the basis of the shape of the real object used by the real user detected from the real space image RP has been described above, an example of converting the real space image RP into the virtual space image VP on the basis of the state of a real object used by a real user detected from the real space image RP will be described.

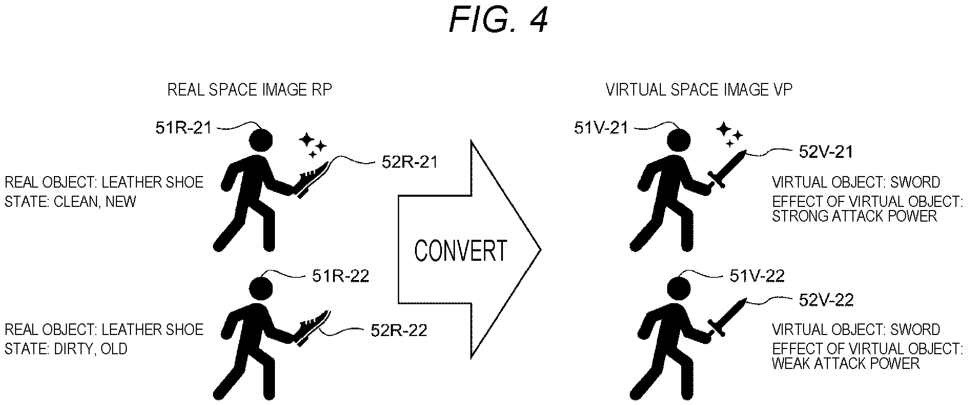

That is, as illustrated in the upper left part of Fig. 4, consider a case where, in the real space image RP, a real user 51R-21 exists, and a situation in which the real user 51R-21 has a real object 52R-21 that is cleanly maintained or is a new (almost brand new) leather shoe is detected.

In this case, for example, the real user 51R-21 and the real object 52R-21 detected when a battle scene is assumed can be regarded as, for example, a hero and a well-managed weapon used by the hero from the relationship.

Therefore, as illustrated in the upper right part of Fig. 4, the information processing unit 32 generates the virtual space image VP by converting the real user 51R-21 and the real object 52R-21 in the real space image RP into a virtual user 51V-21 who is a hero and a virtual object 52V-21 which is a well-managed sword with high (strong) attack power in the corresponding virtual space.

Furthermore, as illustrated in the lower left part of Fig. 4, consider a case where, in the real space image RP, a situation in which a real user 51R-22 holds a real object 52R-22 which is a poorly managed and dirty or old leather shoe is detected.

In this case, for example, the real user 51R-22 and the real object 52R-22 detected when a battle scene is assumed can be regarded as, for example, a hero and a poorly managed weapon used by the hero from the relationship.

Therefore, as illustrated in the lower right part of Fig. 4, the information processing unit 32 generates the virtual space image VP by converting the real user 51R-22 and the real object 52R-22 in the real space image RP into a virtual user 51V-22 who is a hero and a virtual object 52V-22 which is a poorly managed sword with low (weak) attack power in the corresponding virtual space.

<Example based on scene>

While the example of converting the real space image RP into the virtual space image VP on the basis of the state of the real object used by the real user detected from the real space image RP has been described above, an example will be described in which even when real objects used by real users are the same, different scenes are regarded as different relationships, and even the same real space image RP is converted into different virtual space images VP according to the scene.

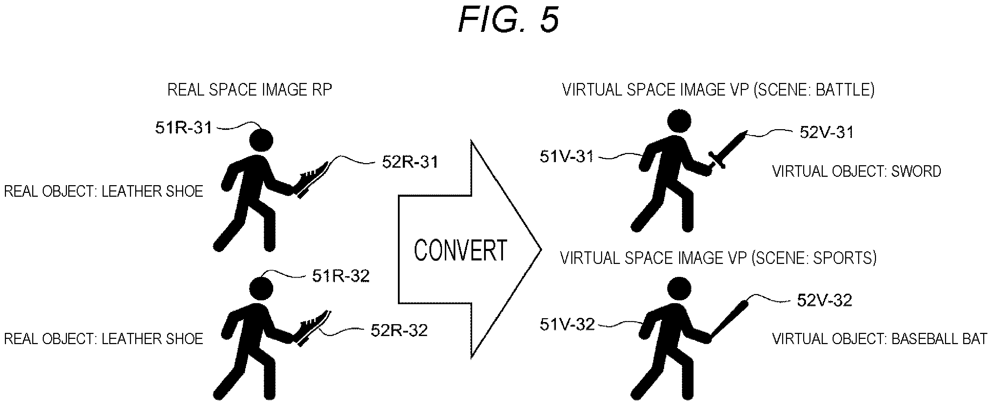

That is, as illustrated in the upper and lower parts of the left part of Fig. 5, consider a case where, in the real space image RP, a real user 51R-31 exists and has a real object 52R-31 which is a leather shoe is detected.

In this case, when a battle scene is assumed, the real user 51R-31 and the real object 52R-31 can be regarded as, for example, a hero and a weapon used by the hero from the relationship.

Therefore, as illustrated in the upper right part of Fig. 5, the information processing unit 32 generates the virtual space image VP by converting the real user 51R-31 and the real object 52R-31 in the real space image RP into a virtual user 51V-31 who is a hero and a virtual object 52V-31 which is a sword as a weapon used by the hero in the corresponding virtual space.

On the other hand, when a sports scene is assumed, a real user 51R-32 and a real object 52R-32 can be regarded as, for example, a baseball player and a bat used by the baseball player from the relationship.

Therefore, as illustrated in the lower right part of Fig. 5, the information processing unit 32 generates the virtual space image VP by converting the real user 51R-32 and the real object 52R-32 in the real space image RP into a virtual user 51V-32 who is a baseball player and a virtual object 52V-32 which is a baseball bat to in the corresponding virtual space.

As described above, even if the relationship between the same real user and the real object is the same in real space, the same real space image is converted into different virtual space images in different scenes.

<Example based on relationship between user and surrounding person>

While the example in which the same real space image RP is converted into different virtual space images VP even with the same relationship on the basis of the scene detected from the real space image RP has been described above, an example in which the real space image RP is converted into the virtual space image VP on the basis of the relationship between persons (other real users) related to a real user detected from the real space image RP will be described.

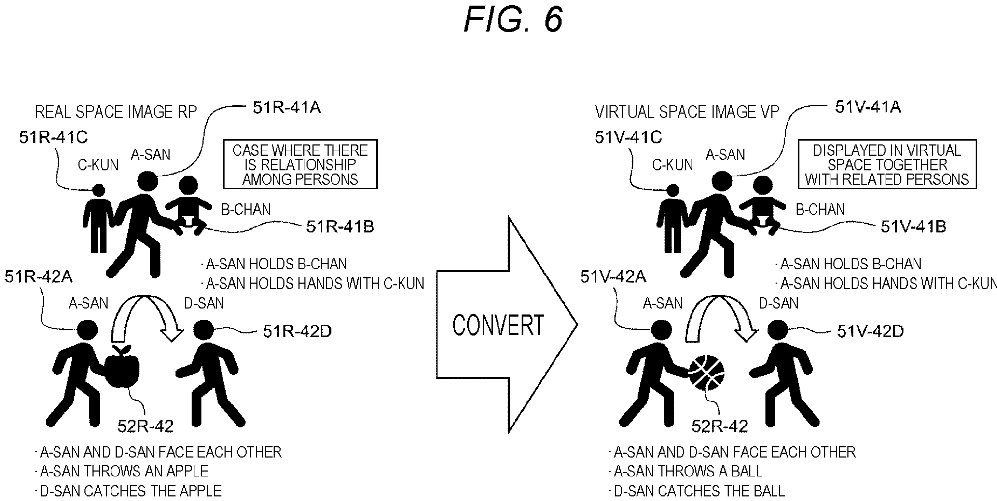

In other words, as illustrated in the upper left part of Fig. 6, consider a case where, in the real space image RP, an adult called A-san, a child called B-chan, and a child called C-kun exist as real users 51R-41A to 51R-41C, respectively, and the real user 51R-41A called A-san holds the real user 51R-41B called B-chan and holds hands with the real user 51R-41C called C-kun.

Note that here, it is assumed that the real user 51R-41A called A-san possesses the information processing unit 32 in real space, and the real user 51R-41B called B-chan and the real user 51R-41C called C-kun are other real users existing around the real user 51R-41A.

In this case, the relationship among the real users 51R-41A, 51R-41B, and 51R-41C can be regarded as, for example, a relationships in which A-san who is an adult is holding the hand of C-kun who is a child while holding B-chan who is a child. That is, here, motions such as holding and holding a hand are detected as the relationship.

Therefore, as illustrated in the upper right part of Fig. 3, the information processing unit 32 converts the real users 51R-41A to 51R-41C in the real space image RP into the virtual space image VP in which a virtual user 51V-41A who is an adult is holding a virtual user 51V-41B who is B-chan as a child, while holding the hand of a virtual user 51V-41C who is C-kun as a child in the corresponding virtual space.

Furthermore, as illustrated in the lower left part of Fig. 6, in the real space image RP, consider a case where real users 51R-42A and 51R-42D called A-san and D-san face each other, and the real user 51R-42A called A-san throws a real object 52R-42 which is an apple to the real user 51R-42D called D-san, and a catching motion of the real user 51R-42D called D-san is detected as the relationship.

Note that here, it is assumed that the real user 51R-42A called A-san possesses the information processing unit 32 in real space, and the real user 51R-42D called D-san is another real user existing around the real user 51R-42A.

In this case, for example, the real users 51R-42A and 51R-42D and the real object 52R-42, which are detected when a scene of playing sports is assumed, can be regarded as, for example, basketball players and a basketball used by the basketball players from the relationship.

Therefore, as illustrated in the lower right part of Fig. 6, the information processing unit 32 generates the virtual space image VP by converting the real users 51R-42A and 51R-42D and the real object 52R-42 in the real space image RP into virtual users 51V-42A and 51V-42D who are basketball players and a virtual object 52V-42 which is a basketball in the corresponding virtual space.

In the virtual space image VP, the virtual users 51V-42A and 51V-42D face each other, the virtual user 51V-42A throws the virtual object 52V-42 which is a basketball to the virtual user 51V-42D, and the virtual user 51V-42D catches the virtual object 52V-42 which is a basketball.

In other words, as described with reference to Fig. 6, not only an object related to the real user wearing the information processing unit 32 in real space, but also other real users related thereto are converted and displayed as virtual users in the virtual space.

<Example of indirect relationship via person or object having relationship with user and example of relationship with a plurality of real objects>

While the example of converting the real space image RP into the virtual space image VP from the relationship between the user and the person around the user detected from the real space image RP has been described above, an example of converting the real space image RP into the virtual space image VP from an indirect relationship via a person or an object having a relationship with the user and a relationship with a plurality of real objects detected from the real space image RP will be described.

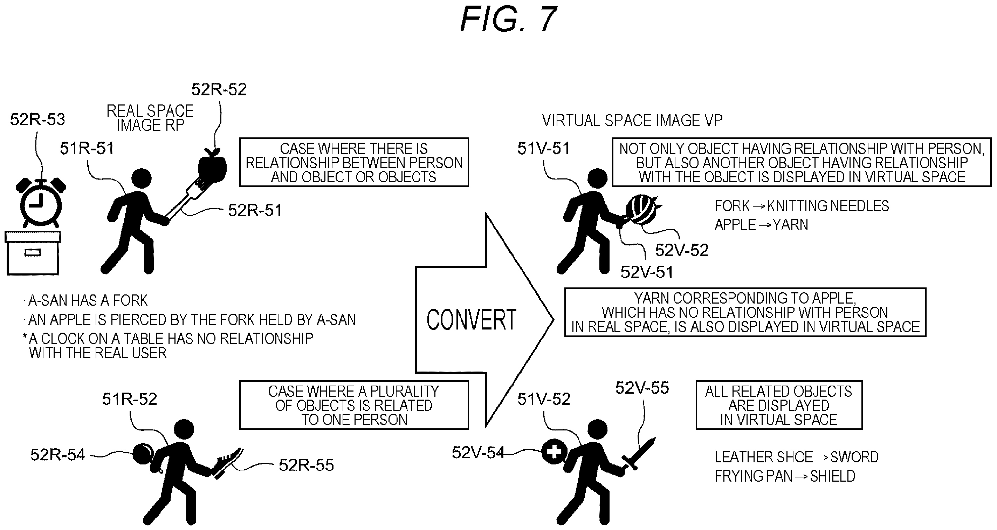

That is, as illustrated in the upper left part of Fig. 7, consider a case where, in the real space image RP, there are a real user 51R-51 called A-san, a real object 52R-51 which is a fork gripped by the real user 51R-51, a real object 52R-52 which is an apple pierced by the real object 52R-51 which is a fork, and a real object 52R-53 which is a clock placed on a table.

In this case, the relationship between the real user 51R-51 and the real objects 52R-51 and 52R-52 can be regarded as, for example, a relationship in which the real user 51R-51 called A-san grips the real object 52R-51 which is a fork pierced with the real object 52R-52 which is an apple.

In this example, the relationships are a motion in which the real user 51R-51 grips the real object 52R-51 which is a fork, and a motion in which the real object 52R-51 which is a fork pierces the real object 52R-52 which is an apple.

Here, there is no direct relationship between the real user 51R-51 and the real object 52R-52 which is an apple, but there is an indirect relationship therebetween via the real object 52R-51 which is a fork having a relationship with the real user 51R-51.

Note that as described above, the real object 52R-53 which is a clock placed on a table has no relationship with the real user 51R-51.

Therefore, for example, in a case of a scene where knitting is performed in a home economics class, as illustrated in the upper right part of Fig. 7, the information processing unit 32 generates the virtual space image VP in which the real user 51R-51 and the real objects 52R-51 to 52R-53 in the real space image RP are depicted as the virtual user 51V-51 corresponding to the real user 51R-51 in the corresponding virtual space, gripping a virtual object 52V-51 which is knitting needles used for knitting piercing a virtual object 52V-52 which is a ball of yarn corresponding to the apple.

That is, not only an object having a direct relationship with the real user wearing the information processing unit 32 in real space, but also another real object having an indirect relationship with the real user via an object having a direct relationship is converted into a virtual object in the virtual space and displayed if there is an indirect relationship with the real user via a person or an object having a direct relationship even if there is no direct relationship with the real user.

Furthermore, as illustrated in the lower left part of Fig. 7, consider a case where, in the real space image RP, a situation in which a real user 51R-52 grips a real object 52R-54 which is a frying pan and a real object 52R-55 which is a leather shoe is detected.

In this case, for example, the real user 51R-52 and the real objects 52R-54 and 52R-55 detected when a battle scene is assumed can be regarded as, for example, a hero, a shield gripped by the hero, and a sword from the relationship.

Therefore, as illustrated in the lower right part of Fig. 7, the information processing unit 32 converts the real user 51R-52 and the real objects 52R-54 and 52R-55 in the real space image RP into a virtual user 51V-52 who is a hero, a virtual object 52 V-54 which is a shield, and a virtual object 52V-55 which is a sword in the corresponding virtual space, and generates the virtual space image VP in which the virtual user 51V-52 grips the virtual object 52V-54 which is a shield and the virtual object 52V-55 which is a sword.

That is, a plurality of real objects having a relationship with the real user wearing the information processing unit 32 in real space is all converted into virtual objects in the virtual space and displayed.

<Example of adding item corresponding to scene>

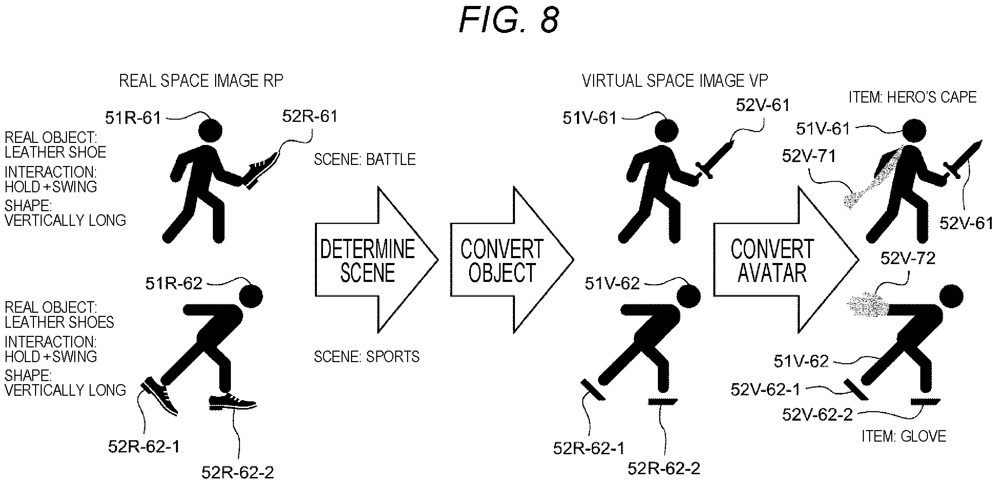

An example of generating the virtual space image VP by converting the real user or the real object in the real space image RP into the virtual user such as an avatar or the virtual object on the basis of the type of the person or the object around the user, and the mutual relationship (interaction) or the scene between the user and the person or the object around the user in the real space image RP has been described. Furthermore, an item corresponding to the scene may be added as illustrated in Fig. 8.

That is, as illustrated in the upper left part of Fig. 8, consider a case where, in the real space image RP, a real user 51R-61 exists and holds a real object 52R-61 which is a vertically long leather shoe, and a swinging motion is detected.

In this case, for example, the real user 51R-61 and the real object 52R-61 detected when a battle scene is assumed can be regarded as, for example, a hero and a weapon used by the hero from the relationship.

Therefore, as illustrated in the upper central part of Fig. 8, the information processing unit 32 generates the virtual space image VP by converting the real user 51R-61 and the real object 52R-61 in the real space image RP into a virtual user 51V-61 who is a hero and a virtual object 52V-61 which is a sword as a weapon in the corresponding virtual space.

Furthermore, the information processing unit 32 adds a virtual object 52V-71 which is a hero's cape to the virtual user 51V-61 who is a hero as an item owned by the hero, for example, as illustrated in the upper right part of Fig. 8.

Furthermore, as illustrated in the lower left part of Fig. 8, consider a case where, in the real space image RP, a real user 51R-62 exists and wears real objects 52R-62-1 and 52R-62-2 which are vertically long leather shoes, and a motion like skating is detected.

In this case, for example, the real user 51R-62 and the real objects 52R-62-1 and 52R-62-2 detected when a scene of playing sports is assumed can be regarded as, for example, a skater and skates used by the skater from the relationship.

Therefore, as illustrated in the lower central part of Fig. 8, the information processing unit 32 generates the virtual space image VP by converting the real user 51R-62 and the real objects 52R-62-1 and 52R-62-2 in the real space image RP into a virtual user 51V-62 who is a corresponding skater in the virtual space and virtual objects 52V-62-1 and 52V-62-2 which are skate shoes.

Furthermore, the information processing unit 32 adds, to the virtual user 51V-62 who is a skater, a virtual object 52V-72 which is a glove of the skater as an item owned by the skater, for example, as illustrated in the lower right part of Fig. 8.

As described above, in the virtual space display system of the present disclosure, the real space image RP is converted into the virtual space image VP and presented to the user on the basis of the mutual relationship (interaction) with the real person or the real object around the real user detected from the real space image RP and the scene.

As a result, the virtual space is expressed in consideration of not only the positions and postures of the user and the persons and objects around the user in real space but also the relationships and scenes, so that it is possible to improve the feeling (immersion) provided to the user to feel as if the user has entered the virtual space.

<<2. Preferred embodiment>>

<Configuration example of virtual space display system of present disclosure>

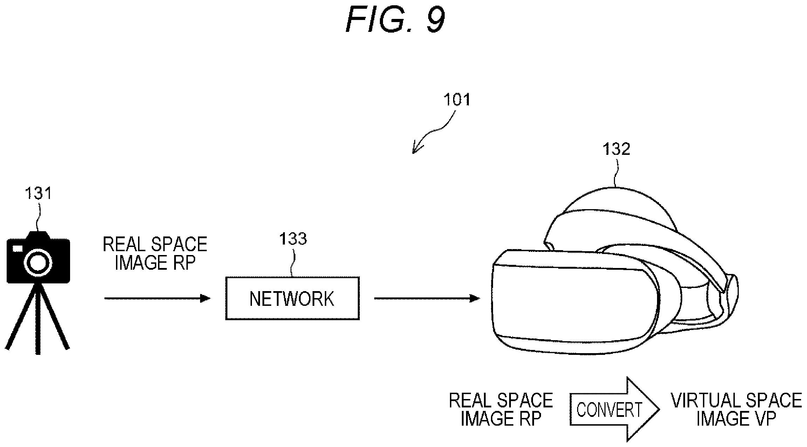

Next, a configuration example of the virtual space display system of the present disclosure will be described with reference to Fig. 9.

A virtual space display system 101 of Fig. 9 images real space as the real space image RP, converts the real space image RP into the virtual space image VP on the basis of the relationship between the real user and the real object detected from the real space image RP, and presents the virtual space image VP to the user.

More specifically, as illustrated in Fig. 9, the virtual space display system 101 includes an imaging device 131 and a virtual space display device 132.

The imaging device 131 and the virtual space display device 132 can communicate with each other via a network 133 represented by the Internet, Wi-Fi, Bluetooth (registered trademark), or the like.

The imaging device 131 is a camera provided with an imaging element including, for example, a complementary metal oxide semiconductor (CMOS) image sensor, a charge coupled device (CCD) image sensor, or the like.

The imaging device 131 images real space in which the user wearing the virtual space display device 132 exists, and transmits the real space image RP, which is the imaging result, to the virtual space display device 132 via the network 133.

The virtual space display device 132 is, for example, virtual reality (VR) goggles or a head mounted display (HMD) worn on the head of the user.

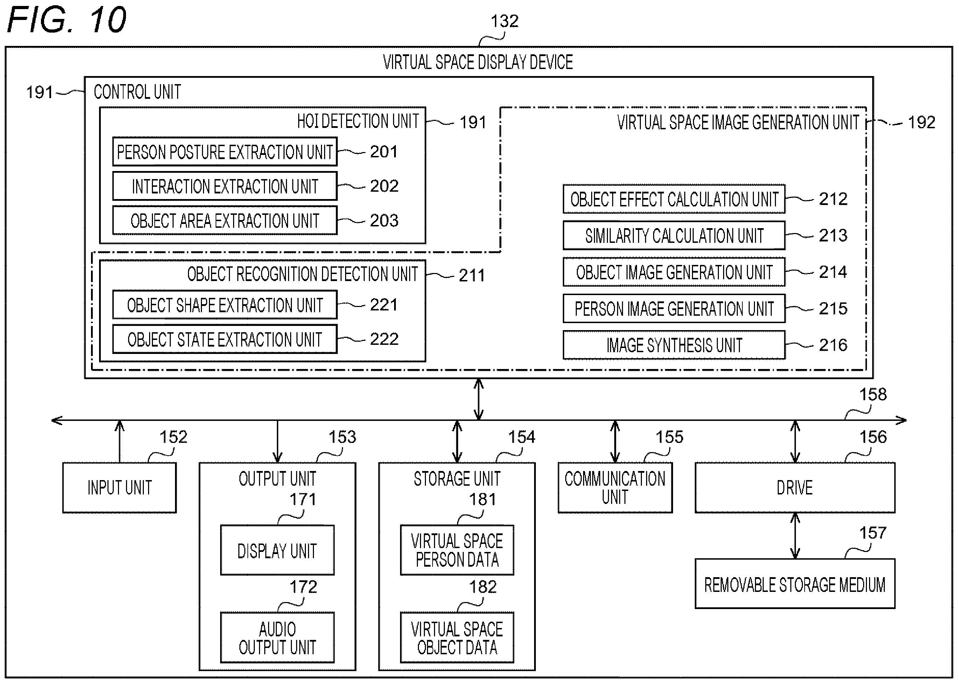

The virtual space display device 132 acquires the real space image RP transmitted from the imaging device 131, converts the real space image RP into the virtual space image VP on the basis of the acquired information of the real space image RP, and displays the real space image RP on a display unit 171 (Fig. 10) including a built-in liquid crystal display (LCD), organic electro-luminescence (EL), or the like, thereby presenting the real space image RP to the user.

More specifically, the virtual space display device 132 detects a mutual relationship (interaction) with a person or an object around the user wearing the virtual space display device 132 in the real space image RP on the basis of the real space image RP transmitted from the imaging device 131.

Then, the virtual space display device 132 converts the real space image RP into the virtual space image VP on the basis of the detected mutual relationship (interaction) with a person or an object around the user and a preset scene, and displays the virtual space image VP on the display unit 171 (Fig. 10) to present to the user.

Note that it is assumed that information regarding a character (avatar) displayed by the user in the virtual space image and information for setting a scene in the virtual space image are set in advance.

The setting of the character (avatar) and the scene of the person corresponding to the user in the virtual space image may be arbitrarily selected and set by the user himself/herself, or may be set according to a stage or a request of a game in the case of a game or the like.

<Configuration example of virtual space display device>

Next, a hardware configuration example of the virtual space display device 132 will be described with reference to a hardware block diagram of Fig. 10.

The virtual space display device 132 includes a control unit 151, an input unit 152, an output unit 153, a storage unit 154, a communication unit 155, a drive 156, and a removable storage medium 157, which are connected to each other via a bus 158, and can transmit and receive data and programs.

The control unit 151 includes a processor and a memory, and controls the entire operation of the virtual space display device 132.

The control unit 151 controls the communication unit 155 to acquire the real space image RP transmitted from the imaging device 131.

The control unit 151 detects a mutual relationship between the user and a person or an object around the user from the acquired real space image RP, converts the real space image RP into the virtual space image VP on the basis of the detection result, and displays the virtual space image VP on the display unit 171.

The control unit 151 includes an HOI detection unit 191 and a virtual space image generation unit 192.

The human object interaction (HOI) detection unit 191 extracts a person's posture, a mutual relationship between the user and a person or an object around the user, and an object area on the basis of the real space image RP, and supplies the result to the virtual space image generation unit 192.

The HOI detection unit 191 includes a person posture extraction unit 201, an interaction extraction unit 202, and an object area extraction unit 203.

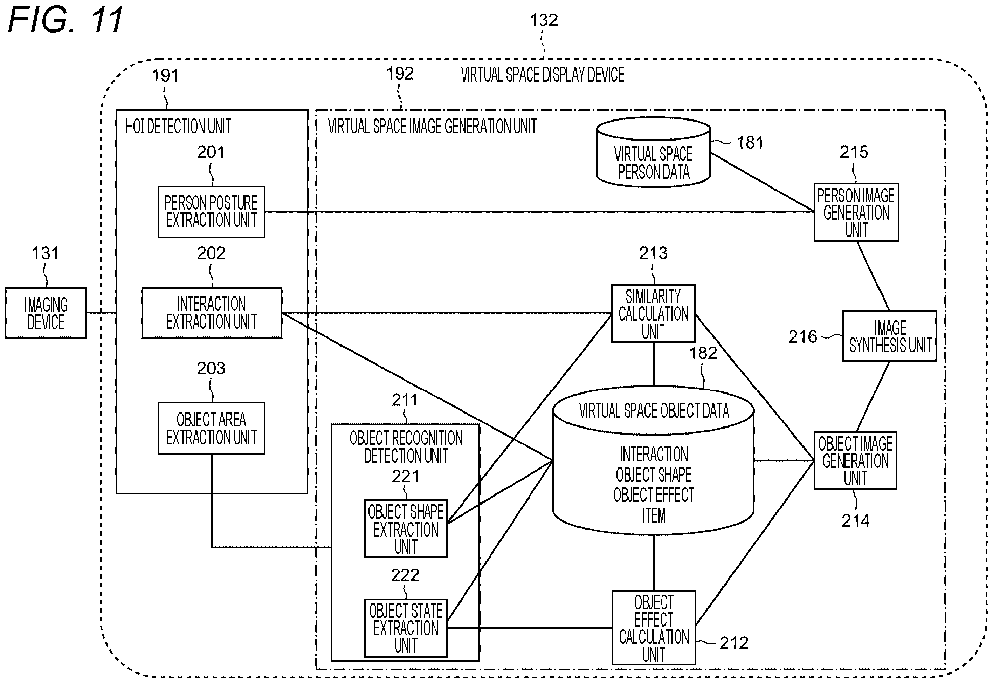

Note that details of each of the person posture extraction unit 201, the interaction extraction unit 202, and the object area extraction unit 203 will be described later with reference to the functional block diagram of Fig. 11.

The virtual space image generation unit 192 converts the real space image RP into the virtual space image VP on the basis of the person's posture, the mutual relationship between the user and a person or an object around the user, and the object area supplied from the HOI detection unit 191, and displays the virtual space image VP on the display unit 171.

The virtual space image generation unit 192 includes an object recognition detection unit 211, an object effect calculation unit 212, a similarity calculation unit 213, an object image generation unit 214, a person image generation unit 215, and an image synthesis unit 216.

In addition, the object recognition detection unit 211 includes an object shape extraction unit 221 and an object state extraction unit 222.

Note that the object recognition detection unit 211, the object effect calculation unit 212, the similarity calculation unit 213, the object image generation unit 214, the person image generation unit 215, and the image synthesis unit 216, and each of the object shape extraction unit 221 and the object state extraction unit 222 in the virtual space image generation unit 192 will be described later in detail with reference to a functional block diagram in Fig. 11.

The input unit 152 includes an input device such as a keyboard, a mouse, or a touch panel with which the user wearing the virtual space display device 132 inputs an operation command, and supplies various input signals to the control unit 151.

The output unit 153 is controlled by the control unit 151, and includes the display unit 171 and an audio output unit 172. The output unit 153 outputs the virtual space image VP which is an operation screen or a processing result to the display unit 171 including a display device such as a liquid crystal display (LCD), an organic electro luminescence (EL), or the like, and displays the virtual space image VP. Furthermore, the output unit 153 controls the audio output unit 172 including an audio output device to reproduce various sounds, music, sound effects, and the like.

The storage unit 154 includes a hard disk drive (HDD), a solid state drive (SSD), a semiconductor memory, or the like, is controlled by the control unit 151, and writes or reads various data and programs. The storage unit 154 stores virtual space person data 181 and virtual space object data 182, and writes or reads corresponding information in response to a request from the control unit 151.

Note that each of the virtual space person data 181 and the virtual space object data 182 will be described in detail later with reference to the functional block diagram of Fig. 11.

The communication unit 155 is controlled by the control unit 151, achieves communication represented by a local area network (LAN), Bluetooth (registered trademark), or the like in a wired or wireless manner, and transmits and receives the real space image RP and various data and programs supplied to and from the imaging device 131 via the network 133 as necessary.

The drive 156 reads and writes data from and to the removable storage medium 157 such as a magnetic disk (including a flexible disk), an optical disk (including a compact disc-read only memory (CD-ROM) and a digital versatile disc (DVD)), a magneto-optical disk (including a mini disc (MD)), or a semiconductor memory.

<Function achieved by virtual space display device of Fig. 10>

Next, with reference to a functional block diagram of Fig. 11, functions implemented by the virtual space display device 132 of Fig. 10 will be described.

The function of the virtual space display device 132 is implemented by the HOI detection unit 191 and the virtual space image generation unit 192.

As described above, the HOI detection unit 191 includes the person posture extraction unit 201, the interaction extraction unit 202, and the object area extraction unit 203.

Furthermore, the virtual space image generation unit 192 includes the object recognition detection unit 211, the object effect calculation unit 212, the similarity calculation unit 213, the object image generation unit 214, the person image generation unit 215, and the image synthesis unit 216.

Furthermore, the object recognition detection unit 211 includes the object shape extraction unit 221 and the object state extraction unit 222.

In addition, in order to implement these functions, the HOI detection unit 191 and the virtual space image generation unit 192 access the virtual space person data 181 and the virtual space object data 182 and acquire various data as necessary.

The human object interaction (HOI) detection unit 191 detects the posture and posture change of the user on the basis of the real space image RP supplied from the imaging device 131, and outputs the posture and posture change to the person image generation unit 215 of the virtual space image generation unit 192.

The HOI detection unit 191 extracts an object area on the basis of the real space image RP supplied from the imaging device 131, and outputs the object area to the object recognition detection unit 211 of the virtual space image generation unit 192.

The HOI detection unit 191 extracts each relationship (interaction) between the user and an object, between the user and another person, between objects, between another person and an object, and between other persons on the basis of the information of the posture and posture change of the user and the object area detected on the basis of the real space image RP supplied from the imaging device 131, and outputs the extracted relationship to the similarity calculation unit 213.

More specifically, the HOI detection unit 191 includes the person posture extraction unit 201, the interaction extraction unit 202, and the object area extraction unit 203.

<Person posture extraction unit>

The person posture extraction unit 201 detects a person including the user in the real space image RP supplied from the imaging device 131, detects a posture by skeleton detection, detects a motion from a time-series posture change, and outputs the motion to the interaction extraction unit 202 and the person image generation unit 215.

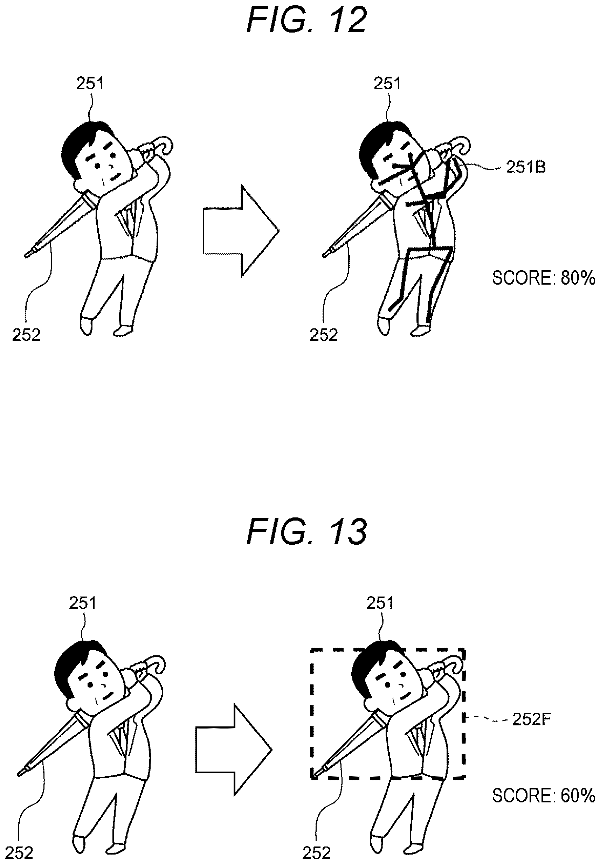

For example, as illustrated in the left part of Fig. 12, consider a case of the real space image RP in which a user 251 is swinging an umbrella 252 like a golf club.

In this case, the person posture extraction unit 201 detects skeleton information 251B as illustrated in the right part of Fig. 12 as posture information by skeleton detection, calculates a score indicating a similarity with a previously registered posture, and outputs information of a posture having the highest score to the interaction extraction unit 202 and the person image generation unit 215.

In the right part of Fig. 12, an example is illustrated in which the score indicating the similarity with the posture of swinging a rod-shaped object like a golf club is the highest and the score is 80%, for example.

Note that since the motion of the user can be obtained from the time-series change in the posture of the skeleton information 251B, the person posture extraction unit 201 may detect a motion identified from time-series posture change, calculate a score indicating the similarity with all the registered motions, and output information of the motion having the highest score.

<Object area extraction unit>

The object area extraction unit 203 extracts an object area in the real space image RP supplied from the imaging device 131, and outputs the object area to the interaction extraction unit 202 and the object recognition detection unit 211.

For example, as illustrated in the left part of Fig. 13 similar to the left part of Fig. 12, consider a case of the real space image RP in which the user 251 is swinging an umbrella like a golf club.

In this case, the object area extraction unit 203 detects an area in which there is a possibility that an object exists as an object area 252F as information of a dotted frame as illustrated in the right part of Fig. 13, calculates the probability of the presence of the object as a score, and outputs the score to the interaction extraction unit 202 and the object recognition detection unit 211. In Fig. 13, the score is 60%.

<Interaction extraction unit>

The interaction extraction unit 202 extracts each relationship (interaction) between the user and an object, between the user and another person, between objects, between another person and an object, between other persons from information of the posture and the score of the person including the user supplied from the person posture extraction unit 201 and the information of the object area and the score supplied from the object area extraction unit 203, and supplies the relationship to the similarity calculation unit 213.

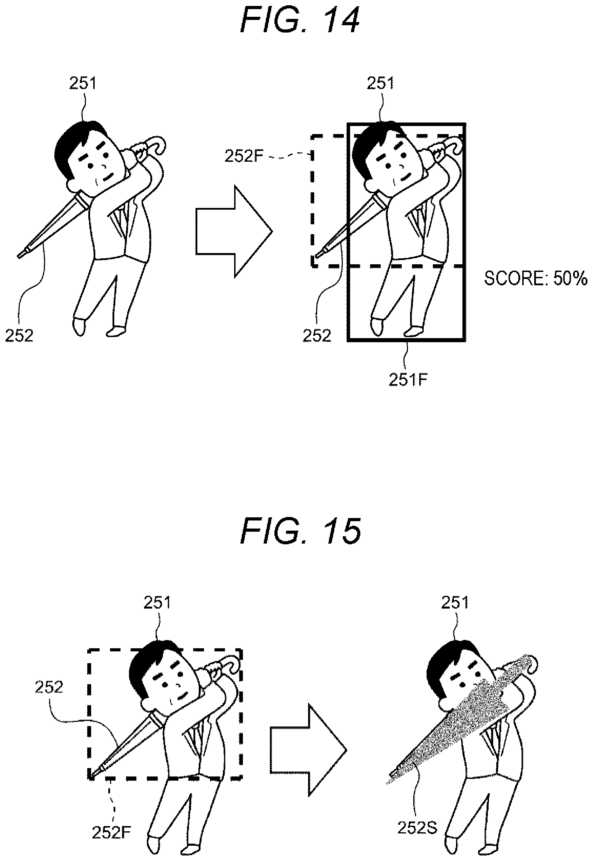

For example, as illustrated in the left part of Fig. 14 similar to the left part of Fig. 12, consider a case of the real space image RP in which the user 251 is swinging an umbrella like a golf club.

The interaction extraction unit 202 calculates a score (similarity score) based on the similarity between a relationship between the person in a person area 251F indicated by a solid frame in which the user 251 is present and the object in the area of an object area 252F indicated by a dotted frame and a preset relationship from the information of the posture and the score of the person including the user supplied from the person posture extraction unit 201 and the information of the object area and the score supplied from the object area extraction unit 203, identifies the relationship having the highest score as the relationship between the person in the person area 251F and the object in the object area 252F, and outputs the relationship together with the similarity score.

In the right part of Fig. 14, it is illustrated that the relationship between the person in the person area 251F that is a solid frame in which the user 251 exists and the object in the object area 252F that is a dotted frame is most likely to be a relationship in which the person in the area of the person area 251F that is a solid frame performs a motion of holding and swinging the object in the object area 252F that is a dotted frame, and the score (similarity score) that is the similarity thereof is 50%.

Note that while only the information indicating the motion of the user (person) using the object is illustrated as the relationship (interaction) in this example, the present invention is not limited thereto, and the same applies to the relationship (motion such as persons holding hands or holding a person) based on the user (person) and surrounding persons described with reference to Fig. 6, the indirect relationship between the user and the object described with reference to Fig. 7, and the relationship between the user and a plurality of real objects.

That is, the relationship may be a relationship between a person and an object, a relationship between persons, a relationship between objects, a combination thereof, or any of these relationships established in an indirect manner via a person or an object.

<Object shape extraction unit>

The object recognition detection unit 211 extracts an object shape, an object state, and a score thereof on the basis of the object area and the score supplied from the object area extraction unit 203 of the HOI detection unit 191.

More specifically, the object recognition detection unit 211 includes the object shape extraction unit 221 and the object state extraction unit 222.

The object shape extraction unit 221 extracts an object shape (segmentation) on the basis of the object area and the score supplied from the object area extraction unit 203 of the HOI detection unit 191, and outputs information of the extracted object shape and a similarity score with the object shape to the similarity calculation unit 213.

For example, in a case where information indicated by a person in an area of the person area 251F indicated by a solid frame in which the user 251 is present and an object area 252F indicated by a dotted frame in the left part of Fig. 15 is supplied, the object shape extraction unit 221 extracts an object shape (segmentation) 252S in the object area 252F as illustrated in the right part of Fig. 15, and outputs information of an object shape similar to the extracted object shape 252S and a similarity score of the object shape to the similarity calculation unit 213. The information of the object shape similar to the extracted object shape 252S and the score based on the similarity of the object shape are, for example, information of the object shape having the highest similarity with the extracted object shape 252S among the various registered object shapes and the highest similarity itself.

<Object state extraction unit>

The object state extraction unit 222 extracts the object state as a score on the basis of the information of the object area supplied from the object area extraction unit 203 of the HOI detection unit 191, and outputs information of the extracted score indicating the object state to the object effect calculation unit 212.

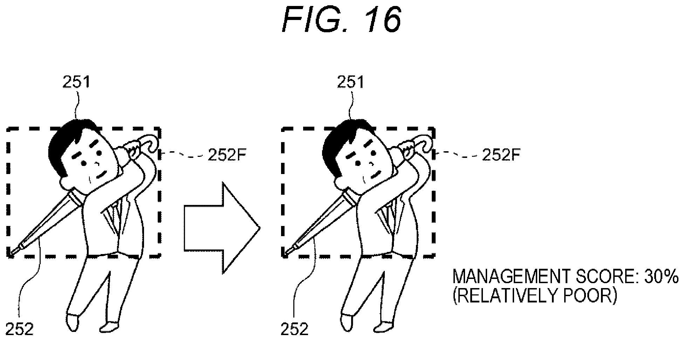

For example, in a case where the information of the object area 252F indicated by a dotted frame in which the user 251 exists and the held object exists in the left part of Fig. 16 is supplied, the object state extraction unit 222 extracts a score indicating the object state and outputs the extracted score indicating the object state to the object effect calculation unit 212 as illustrated in the right part of Fig. 16.

Here, the object state indicates the degree of the management state of the object, and is expressed as, for example, a degree of management including a score of 0 to 100%. A state in which the object is new, that is, an unused state is 100%, i.e., the maximum value, and is a value that decreases according to aging deterioration or a management state.

The object state extraction unit 222 is based on a generative model that estimates a distribution of image data and samples an image according to the distribution. More specifically, the object state extraction unit 222 learns new object information by using various types of unused object images as learning data to be input.

In the object state extraction unit 222 in which such learning is performed, a used object having a flaw or dirt cannot be sampled well, and thus, the difference between the object in the object area and the output of the generative model is large. Therefore, the object state extraction unit 222 calculates this difference as a degree of management which is an index indicating how close an object in the object area is to an unused new object, that is, how much the object is managed.

<Similarity calculation unit>

The similarity calculation unit 213 accesses the virtual space object data 182, calculates a similarity score with object data set in the virtual space on the basis of the information of the relationship and the similarity score of the relationship supplied from the interaction extraction unit 202 of the HOI detection unit 191, and the information of the object shape and the similarity score of the object shape supplied from the object shape extraction unit 221 of the object recognition detection unit 211, determines an object having the highest similarity score as an object in the virtual space, and notifies the object image generation unit 214 of the determined information of the object in the virtual space.

The virtual space object data 182 is a database of virtual space object candidates in which an object in real space is converted as an object in the virtual space, and for each virtual space object candidate, an object ID, an object image, an object shape, an interaction, an object effect, and information of an item are stored in the database.

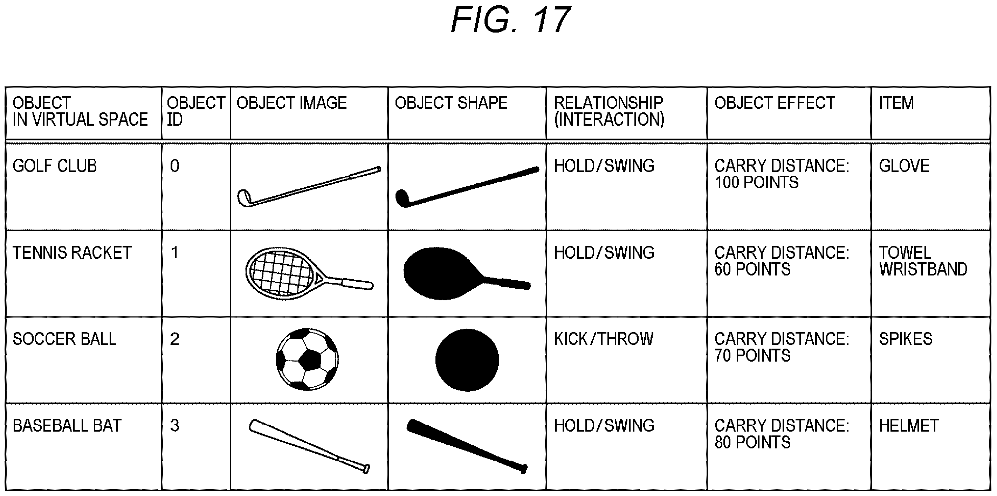

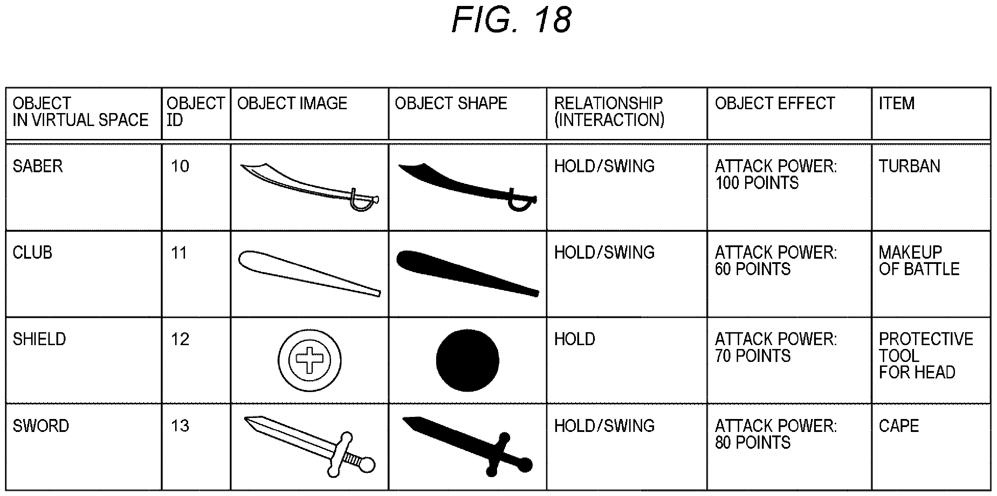

The virtual space object data 182 is set according to the scene, and is, for example, a database as illustrated in Figs. 17 and 18.

Fig. 17 illustrates an example of a database in a case where the scene is sports, and items of an object in the virtual space as a virtual space object candidate, an object ID, an object image, an object shape, a relationship (interaction), an object effect, and an item are set from the left, and a golf club, a tennis racket, a soccer ball, and a baseball bat are registered as the objects in the virtual space from the top.

For the golf club, from the left in Fig. 17, an object ID is 0, an image of the golf club is registered, an object shape of the golf club is registered, hold and swing are registered as relationships (interactions), a carry distance of 100 points is registered as an object effect, and a glove is registered as an item.

For the tennis racket, from the left in Fig. 17, an object ID is 1, an image of the tennis racket is registered, an object shape of the tennis racket is registered, hold and swing are registered as relationships (interactions), a carry distance of 60 points is registered as an object effect, and towel and wristband are registered as items.

For the soccer ball, from the left in Fig. 17, an object ID is 2, an image of the soccer ball is registered, an object shape of the soccer ball is registered, kick and throw are registered as relationships (interactions), a carry distance of 70 points is registered as an object effect, and spikes are registered as an item.

For the baseball bat, from the left in Fig. 17, an object ID is 3, an image of the baseball bat is registered, an object shape of the baseball bat is registered, hold and swing are registered as relationships (interactions), a carry distance of 80 points is registered as an object effect, and a helmet is registered as an item.

Fig. 18 illustrates an example of a database in a case where the scene is battle, and items similar to those in Fig. 17 are set from the left, and a saber, a club, a shield, and a sword are registered as the objects in the virtual space from the top.

For the saber, from the left in Fig. 18, an object ID is 10, an image of the saber is registered, an object shape of the saber is registered, hold and swing are registered as relationships (interactions), an attack power of 100 points is registered as an object effect, and a turban is registered as an item.

For the club, from the left in Fig. 18, an object ID is 11, an image of the club is registered, an object shape of the club is registered, hold and swing are registered as relationships (interactions), an attack power of 60 points is registered as an object effect, and makeup of battle is registered as an item.

For the shield, from the left in Fig. 18, an object ID is 12, an image of the shield is registered, an object shape of the shield is registered, hold is registered as a relationship (interaction), an attack power of 70 points is registered as an object effect, and a protective tool for the head is registered as an item.

For the sword, from the left in Fig. 18, an object ID is 13, an image of the sword is registered, an object shape of the sword is registered, hold and swing are registered as relationships, an attack power of 80 points is registered as an object effect, and a cape is registered as an item.

As illustrated in Figs. 17 and 18, the virtual space object data 182 includes a plurality of databases set for each scene, and may be switched and used according to the scene, for example.

On the basis of the relationship (interaction) supplied from the interaction extraction unit 202 of the HOI detection unit 191 and the object shape supplied from the object shape extraction unit 221 of the object recognition detection unit 211, the similarity calculation unit 213 calculates a similarity score Si by calculating the following formula (1) for each of the virtual space object candidates identified in the set scene among the virtual space object candidates registered in the virtual space object data 182.

$$Si = A \times Sis + B \times Sii$$
$$\cdots(1)$$

Here, Si is the similarity of ID = i among the objects in the virtual space to be the virtual space object candidates, Sis is the similarity score of the object shape, Sii is the similarity score of the relationship (interaction), A and B are weighting factors that can be arbitrarily set, and both are values of 0 to 1, and A + B = 1.

That is, the similarity score Sii of the relationship (interaction) is a similarity score between the relationship (interaction) supplied from the interaction extraction unit 202 of the HOI detection unit 191 and the relationship (interaction) of the object in the virtual space registered in the virtual space object data 182 of ID = i.

In addition, the shape similarity score $S_{is}$ is a similarity score between the object shape supplied from the object shape extraction unit 221 of the object recognition detection unit 211 and the object shape in the virtual space to be the virtual space object candidate registered in the virtual space object data 182 of ID = i.

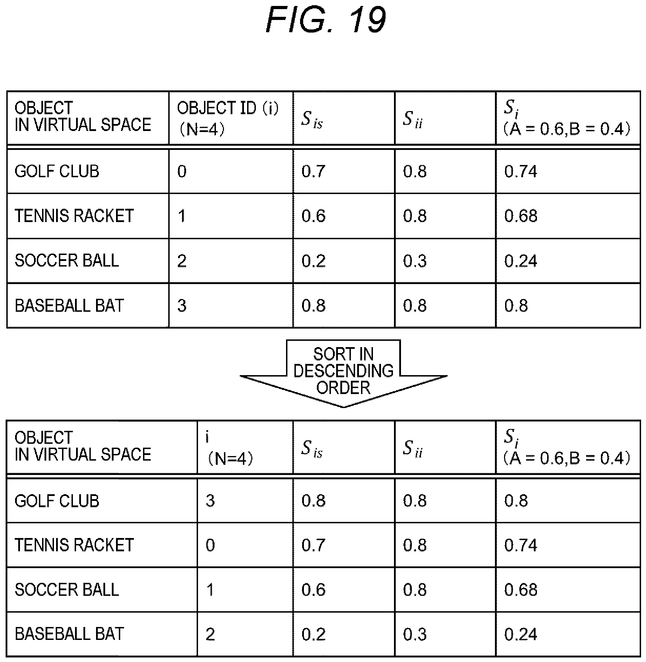

For example, in a case where the weighting factors A and B are 0.6 and 0.4, respectively, as illustrated in the upper part of Fig. 19, when the object ID = 0, the object in the virtual space is a golf club, the similarity score $S_{is}$ of the object shape is 0.7, and the similarity score $S_{ii}$ of the relationship is 0.8, the similarity score $S_i$ is 0.74 (= 0.6 × 0.7 + 0.4 × 0.8).

In addition, when the object ID = 1, the object in the virtual space is a tennis racket, the similarity score $S_{is}$ of the object shape is 0.6, and the similarity score $S_{ii}$ of the relationship is 0.8, the similarity score $S_i$ is 0.68 (= 0.6 × 0.6 + 0.4 × 0.8).

Furthermore, when the object ID = 2, the object in the virtual space is a soccer ball, the similarity score $S_{is}$ of the object shape is 0.2, and the similarity score $S_{ii}$ of the relationship is 0.3, the similarity score $S_i$ is 0.24 (= 0.6 × 0.2 + 0.4 × 0.3).

Similarly, when the object ID = 3, the object in the virtual space is a baseball bat, the similarity score $S_{is}$ of the object shape is 0.8, and the similarity score $S_{ii}$ of the relationship is 0.8, the similarity score $S_i$ is 0.8 (= 0.6 × 0.8 + 0.4 × 0.8).

As illustrated in the upper part of Fig. 19, when the similarity scores $S_i$ are obtained, the similarity calculation unit 213 sorts the objects in descending order of the similarity scores $S_i$ as illustrated in the lower part of Fig. 19, and identifies the object in the virtual space, which is the virtual space object candidate having the highest similarity score $S_i$, as the object in the virtual space corresponding to the object in real space.

The lower part of Fig. 19 illustrates, from the top, that the similarity score $S_i$ of the golf club with the object ID = 3 is 0.8, the similarity score $S_i$ of the tennis racket with the object ID = 0 is 0.74, the similarity score $S_i$ of the soccer ball with the object ID = 1 is 0.68, and the similarity score $S_i$ of the baseball bat with the object ID = 2 is 0.24.

As a result, in the case of the lower part of Fig. 19, the golf club with the object ID = 3 having the highest similarity score $S_i$ is identified as the object in the virtual space corresponding to the object in real space.

Note that the relationship (interaction) in Figs. 17 and 18 illustrates only the information indicating the relationship between the user and the object, but is not limited thereto, and the same applies to the relationship based on the user and surrounding persons described with reference to Fig. 6, the indirect relationship with the user described with reference to Fig. 7, and the relationship with a plurality of real objects.

<Object image generation unit and object effect calculation unit>

When acquiring the determined information of the object in the virtual space corresponding to the object in real space supplied from the similarity calculation unit 213, the object image generation unit 214 accesses the virtual space object data 182 and reads the information of the image of the determined object in the virtual space and the information of the item.

The object image generation unit 214 outputs the information of the object in the virtual space corresponding to the object in real space supplied from the similarity calculation unit 213 to the object effect calculation unit 212.

The object effect calculation unit 212 calculates an object effect on the basis of the score of the object state supplied from the object state extraction unit 222 and the information of the object in the virtual space corresponding to the object in real space supplied from the object image generation unit 214, and supplies the object effect to the object image generation unit 214.

More specifically, the object effect calculation unit 212 accesses the virtual space object data 182, reads the information of the object effect corresponding to the information of the object in the virtual space corresponding to the object in real space, reads the information of the object effect, corrects the information with the score of the object state supplied from the object state extraction unit 222, and supplies the corrected information to the object image generation unit 214.

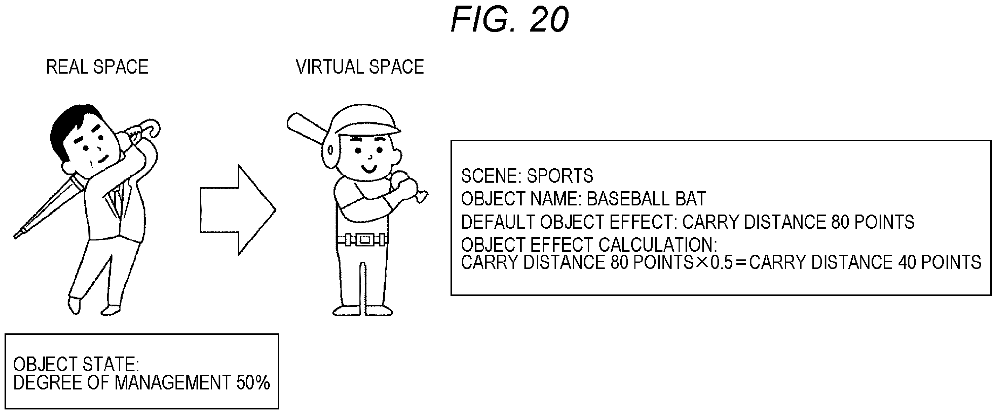

That is, for example, as illustrated in Fig. 20, in a case where the scene is sports and a baseball bat is identified as an object in the virtual space corresponding to an object in real space, a carry distance of 80 points, which is an object effect registered in the virtual space object data 182, is read as a default object effect.

Here, as illustrated in Fig. 20, when the score of the object state supplied from the object state extraction unit 222 is the degree of management of 50%, the object effect calculation unit 212 multiplies the carry distance of 80 points, which is the default object effect, by 50%, which is the score of the object state, to calculate the object effect as the carry distance of 40 (= 80 × 50%) points, and outputs information indicating that the calculated object effect is the carry distance of 40 points to the object image generation unit 214.

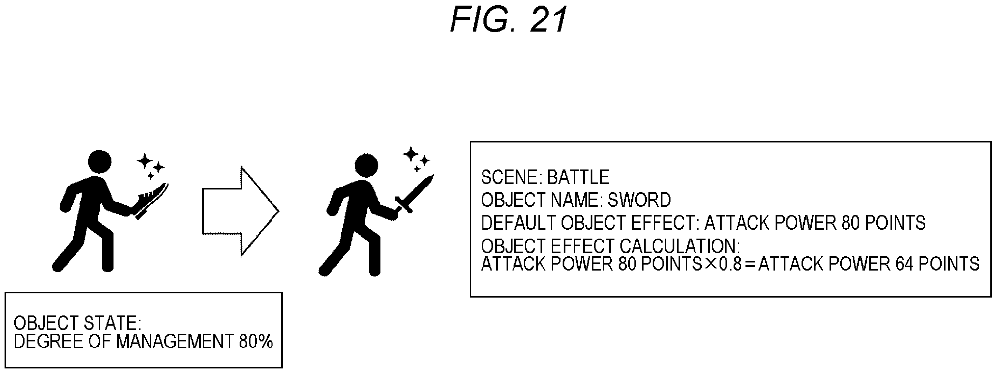

Furthermore, for example, as illustrated in Fig. 21, in a case where the scene is battle and a sword is identified as an object in the virtual space corresponding to an object in real space, the attack power of 80 points, which is an object effect registered in the virtual space object data 182, is read as a default object effect.

Here, as illustrated in Fig. 21, when the score of the object state supplied from the object state extraction unit 222 is the degree of management of 80%, the object effect calculation unit 212 multiplies the attack power of 80 points, which is the default object effect, by 80%, which is the score of the object state, to calculate the object effect as the carry distance 64 (= 80 × 80%) points, and outputs information indicating that the calculated object effect is the attack power of 64 points to the object image generation unit 214.

The object image generation unit 214 generates a virtual object image on the basis of the information of the image of the determined object in the virtual space and the information of the item, which are read from the virtual space object data 182, and the information of the object effect supplied from the object effect calculation unit 212, and outputs the virtual object image to the image synthesis unit 216.

(Person image generation unit)

When the posture information of the user is supplied from the person posture extraction unit 201 of the HOI detection unit 191, the person image generation unit 215 accesses the virtual space person data 181, reads image information of a preset character (avatar) among the registered characters (avatars), generates a person image by deforming the person image in accordance with the supplied posture information, and outputs the person image to the image synthesis unit 216.

(Image synthesis unit)

The image synthesis unit 216 synthesizes the object image supplied from the object image generation unit 214 and the person image supplied from the person image generation unit 215, generates the virtual space image VP, and displays the virtual space image VP on the display unit 171 as a conversion result of the real space image RP.

<Virtual space display processing>

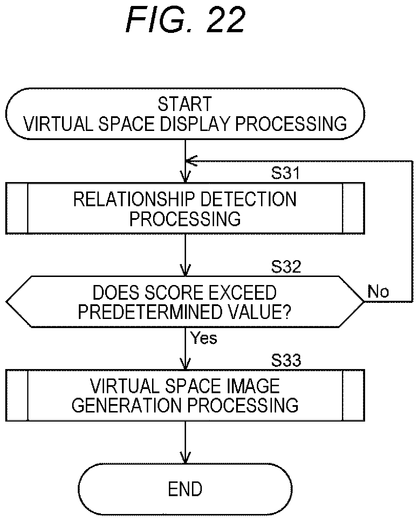

Next, virtual space display processing by the virtual space display device 132 will be described with reference to a flowchart of Fig. 22.

In step S31, the HOI detection unit 191 controls the communication unit 155 to acquire the real space image captured by the imaging device 131, executes the relationship detection processing on the basis of the acquired real space image, detects a relationship (interaction) related to the object in the virtual space related to the set scene among the objects in the virtual space registered in the virtual space object data 182, and calculates a score. At this time, the HOI detection unit 191 extracts the posture and the score of the person in the real space image, extracts the object area and the score, and outputs the object area and the score to the virtual space image generation unit 192.

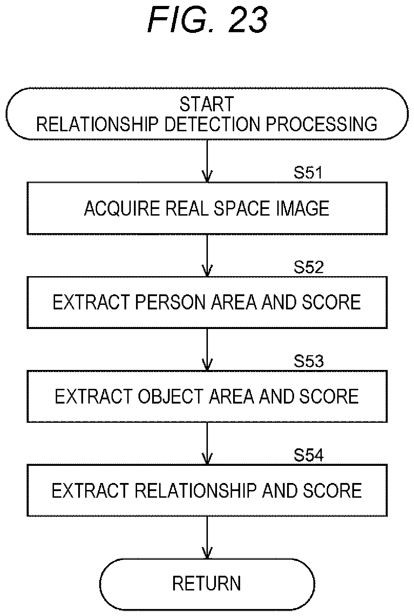

Note that the relationship detection processing will be described later in detail with reference to the flowchart of Fig. 23.

In step S32, the HOI detection unit 191 determines whether or not there is a score exceeding a predetermined value among the calculated scores.

If it is determined in step S32 that there is no score exceeding the predetermined value among the calculated scores, the processing returns to the processing of step S31.

That is, in step S31, the real space image RP is acquired and the relationship detection processing is repeated until it is determined that there is a score exceeding the predetermined value among the calculated scores.

Then, if it is determined in step S32 that there is a score exceeding the predetermined value among the calculated scores, the processing proceeds to step S33.

In step S33, the virtual space image generation unit 192 executes the virtual space image generation processing, generates the virtual space image VP on the basis of the relationship related to the user and the object obtained from the real space image RP, thereby converting the real space image RP into the virtual space image VP and displaying the virtual space image VP on the display unit 171.

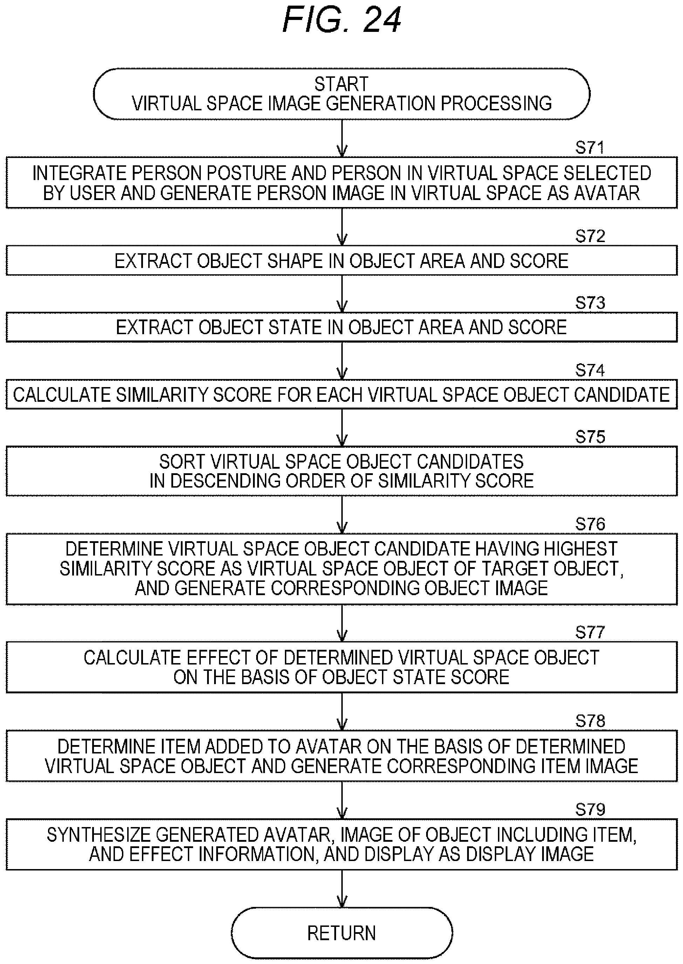

Note that the virtual space image generation processing will be described later in detail with reference to the flowchart of Fig. 24.

With the above processing, the relationship is obtained on the basis of the real space image, and the real space image is converted into the virtual space image on the basis of the relationship and displayed.

<Relationship detection processing>

Next, the relationship detection processing by the HOI detection unit 191 will be described with reference to the flowchart of Fig. 23.

In step S51, the HOI detection unit 191 controls the communication unit 155 to acquire the real space image captured by the imaging device 131 via the network 133.

In step S52, as described with reference to Fig. 12, the person posture extraction unit 201 of the HOI detection unit 191 extracts the posture and score of the user on the basis of the real space image, and outputs the posture and score to the person image generation unit 215 and the interaction extraction unit 202.

In step S53, as described with reference to Fig. 13, the object area extraction unit 203 of the HOI detection unit 191 extracts the object area and the score on the basis of the real space image, and outputs the object area and the score to the object recognition detection unit 211 and the interaction extraction unit 202.

In step S54, as described with reference to Fig. 14, the interaction extraction unit 202 of the HOI detection unit 191 extracts the relationship and score (similarity score Sii) related to the person and the object on the basis of the real space image, and outputs the relationship and score to the similarity calculation unit 213.

With the series of processing described above, the relationship and the score (similarity score Sii) related to the person and the object in the real space image are detected on the basis of the real space image, and the posture and the score of the person and the object area are extracted.

<Virtual space image generation processing>

Next, virtual space image generation processing by the virtual space image generation unit 192 will be described with reference to the flowchart of Fig. 24.

In step S71, when acquiring the posture and the score of the person supplied from the person posture extraction unit 201 of the HOI detection unit 191, the person image generation unit 215 integrates the posture and the score with the image information of the person (character) in the virtual space selected by the user, generates a person image in the virtual space as an avatar, and outputs the person image to the image synthesis unit 216.

In step S72, as described with reference to Fig. 15, the object shape extraction unit 221 of the object recognition detection unit 211 extracts the object shape on the basis of the information of the object area, calculates the score (similarity score Sis) of the object shape, and outputs the score to the similarity calculation unit 213.

In step S73, as described with reference to Fig. 16, the object state extraction unit 222 of the object recognition detection unit 211 extracts the object state on the basis of the information of the object area, calculates the score (similarity score Sis) of the object state, and outputs the score to the object effect calculation unit 212.

In step S74, as described with reference to the upper part of Fig. 19, the similarity calculation unit 213 sets the object in the virtual space related to the preset scene among the data of objects in the virtual space registered in the virtual space object data 182 as the virtual space object candidate, and calculates the similarity score (similarity score Si) based on the weighted product sum of the similarity score (similarity score Sis) of the object shape and the similarity score (similarity score Sis) of the relationship for each virtual space object candidate.

In step S75, as described with reference to the lower part of Fig. 19, the similarity calculation unit 213 sorts the virtual space object candidates such that the similarity scores (similarity scores Si) are in descending order on the basis of the calculated similarity scores (similarity scores Si) of the virtual space object candidates.

In step S76, the similarity calculation unit 213 determines the virtual space object candidate having the highest similarity score (similarity score Si) as the object in the virtual space of the target object, and outputs the object to the object image generation unit 214. In response to this, the object image generation unit 214 accesses the virtual space object data 182, reads an image corresponding to the determined object in the virtual space, and generates an object image. Furthermore, the object image generation unit 214 outputs information of the determined object in the virtual space to the object effect calculation unit 212.

In step S77, the object effect calculation unit 212 accesses the virtual space object data 182, reads the information of the object effect as default information on the basis of the information of the determined object in the virtual space, calculates the object effect on the basis of the score of the object state supplied from the object state extraction unit 222, and outputs the object effect to the object image generation unit 214.

In step S78, the object image generation unit 214 accesses the virtual space object data 182, reads the information of the item set in association on the basis of the object in the virtual space, generates an item image, and outputs the item image to the image synthesis unit 216.

In step S79, the image synthesis unit 216 synthesizes the person image and the object image, adds the item image to the person image, and causes the display unit 171 to display the image.

With the above processing, the relationship related to the person and the object is obtained on the basis of the real space image, the object in the virtual space corresponding to the object in real space is identified according to the relationship, and the person image in the virtual space and the object image in the virtual space are combined to generate the virtual space image.

As a result, since the real space image is converted into the virtual space image on the basis of the mutual relationship with the person or the object in the real space image, the virtual space image in which the relationship between the user and the person or the object around the user in real space is appropriately reflected is presented, so that immersion of the user can be improved.

With the processing as described above, it is possible to use an object that does not exist in real space in the virtual space, and, for example, when a person who does not have a musical instrument in real space holds an object having a shape similar to the musical instrument and takes a posture or a motion to play the musical instrument, it is possible to play the musical instrument in the virtual space.

In addition, even if friends who are far away from each other cannot gather in real space, for example, they can play sports together in virtual space using what they have at home.

That is, for example, when friends far away from each other perform a motion of holding and swinging a long item in their house, it is possible to perform a sport of fighting at the same place with a corresponding weapon in the virtual space.

Furthermore, in an adventure game in the virtual space, in a case where a leather shoe in real space can be swung to be converted into a sword and used, it is possible to increase the attack power of the sword in the virtual space by polishing the leather shoe in real space. As a result, it is possible to acquire a habit of treating things that can be handled in a game in virtual space with care in real space as well.

Furthermore, it is also possible to enjoy finding out what kind of object an object in real space is converted into in the virtual space.

Moreover, by changing various conditions such as the shape, state, and relationship of the object handled in real space, the virtual object converted and displayed in the virtual space can be changed. Hence, it is possible to provide a virtual space image that does not bore the user.

<<3. Example of execution by software>>

Incidentally, the series of processing described above can be executed by hardware, but can also be executed by software. In a case where the series of processing is executed by software, a program forming the software is installed from a recording medium into, for example, a computer built into dedicated hardware or a general-purpose computer that is capable of executing various functions by installing various programs, or the like.

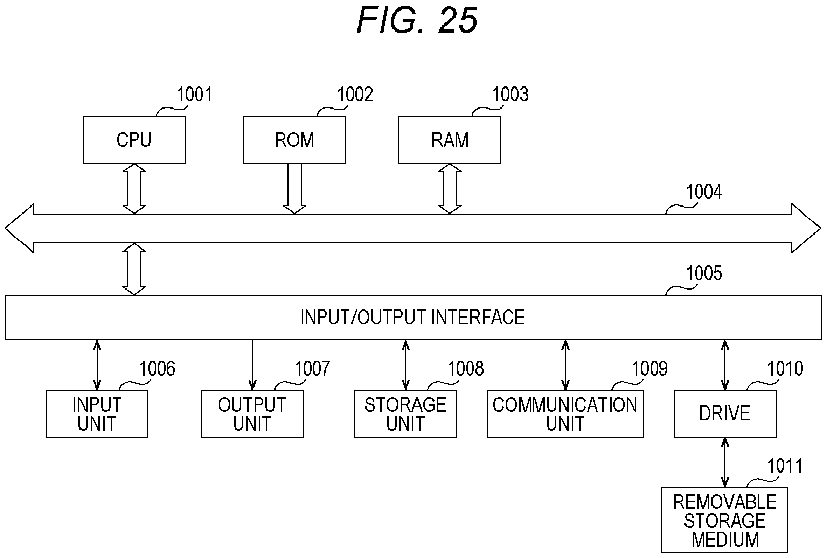

Fig. 25 illustrates a configuration example of a general-purpose computer. This computer includes a central processing unit (CPU) 1001. An input/output interface 1005 is connected to the CPU 1001 via a bus 1004. A read only memory (ROM) 1002 and a random access memory (RAM) 1003 are connected to the bus 1004.

The input/output interface 1005 is connected to an input unit 1006 including an input device such as a keyboard or a mouse with which the user inputs an operation command, an output unit 1007 that outputs a processing operation screen and an image of a processing result to a display device, a storage unit 1008 including a hard disk drive or the like that stores programs and various types of data, and a communication unit 1009 that includes a local area network (LAN) adapter or the like and executes communication processing via a network represented by the Internet. Further, a drive 1010 that reads and writes data from and to a removable storage medium 1011 such as a magnetic disk (including flexible disk), an optical disc (including compact disc-read only memory (CD-ROM) and digital versatile disc (DVD)), a magneto-optical disk (including mini disc (MD)), or a semiconductor memory is connected.

The CPU 1001 performs various types of processing according to a program stored in the ROM 1002 or a program read from the removable storage medium 1011 such as a magnetic disk, an optical disc, a magneto-optical disk, or a semiconductor memory, installed in the storage unit 1008, and loaded from the storage unit 1008 into the RAM 1003. Further, the RAM 1003 also appropriately stores data necessary for the CPU 1001 to perform various types of processing, and the like.

In the computer configured as described above, for example, the CPU 1001 loads the program stored in the storage unit 1008 into the RAM 1003 via the input/output interface 1005 and the bus 1004 and executes the program, thereby performing the above-described series of processing.

The program executed by the computer (CPU 1001) can be provided by being recorded in the removable storage medium 1011 as a package medium or the like, for example. Further, the program can be provided via a wired or wireless transmission medium such as a local area network, the Internet, or digital satellite broadcasting.

In the computer, the program can be installed in the storage unit 1008 via the input/output interface 1005 by attaching the removable storage medium 1011 to the drive 1010. Furthermore, the program can be received by the communication unit 1009 via a wired or wireless transmission medium and installed in the storage unit 1008. Further, the program can be installed in the ROM 1002 or the storage unit 1008 in advance.

Note that the program executed by the computer may be a program in which processing is performed in time series in the order described in the present specification or may be a program in which processing is performed in parallel or at a necessary timing such as when a call is made.

Note that the CPU 1001 in Fig. 25 implements the functions of the HOI detection unit 191 and the virtual space image generation unit 192 of Figs. 10 and 11.

Also, in the present specification, a system means an assembly of a plurality of components (devices, modules (parts), and the like), and it does not matter whether or not all the components are in the same casing. Therefore, a plurality of devices housed in separate casings and connected to each other via a network and one device in which a plurality of modules is housed in one housing are both systems.

Note that embodiments of the present disclosure are not limited to the embodiments described above, and various modifications may be made without departing from the scope of the present disclosure.

For example, the present disclosure may have a configuration of cloud computing in which one function is shared by a plurality of devices via a network and processing is performed in cooperation.

Further, each step described in the flowchart described above can be performed by one device or can be shared and performed by a plurality of devices.

Furthermore, in a case where a plurality of processes is included in one step, the plurality of processes included in the one step may be performed by one device, or may be performed by a plurality of devices in a shared manner.

Note that the present disclosure may also have the following configurations.

<1> An information processing device including

a relationship extraction unit that extracts a relationship between a user in real space and a person or an object around the user from a real space image including the user and the person or the object, and
a virtual space image generation unit that converts the user and the person or the object into an avatar and a virtual object in a virtual space on the basis of the relationship, and converts and generates the real space image into a virtual space image.

<2> The information processing device according to <1>, in which
the relationship is a motion of the user with respect to the person or the object.
<3> The information processing device according to <2>, in which
the relationship is a direct motion of the user with respect to the person or the object.
<4> The information processing device according to <2>, in which
the relationship is an indirect motion of the user with respect to the person or the object.
<5> The information processing device according to any one of <1> to <3>, further including

an object shape extraction unit that extracts an object shape that is a shape of the object included in the real space image, in which

the virtual space image generation unit converts the user and the person or the object into an avatar and a virtual object in the virtual space on the basis of the relationship and the object shape, and converts and generates the real space image into a virtual space image.

<6> The information processing device according to <5>, further including

a virtual object candidate database in which a virtual object candidate to be a candidate of the virtual object into which the object is converted is registered in association with a relationship and an object shape set for each of the virtual object candidates, in which

the virtual space image generation unit converts the object into the virtual object corresponding to the virtual object candidate having the relationship and the object shape similar to those of the object among the virtual object candidates registered in the virtual object candidate database.

<7> The information processing device according to <6>, further including

a similarity calculation unit that calculates, as a virtual object candidate similarity, a similarity with the relationship and the object shape of the object based on the relationship and the object shape set for each of the virtual object candidates registered in the virtual object candidate database, in which
the virtual space image generation unit converts the object into the virtual object corresponding to the virtual object candidate having the highest virtual object candidate similarity with the object among the virtual object candidates registered in the virtual object candidate database.

<8> The information processing device according to <7>, in which
the similarity calculation unit calculates the virtual object candidate similarity by a weighted product sum of a similarity of the relationship and a similarity of the object shape of each of the virtual object candidates registered in the virtual object candidate database.
<9> The information processing device according to <7>, in which
the virtual space image generation unit converts the user and the person or the object into an avatar and a virtual object in the virtual space on the basis of a scene, the relationship, and the object shape, and converts and generates the real space image into a virtual space image.
<10> The information processing device according to <9>, in which

the virtual object candidate database includes a plurality of databases set according to the scene, and
the virtual space image generation unit switches the plurality of databases forming the virtual object candidate database according to the scene, and converts the object into the virtual object corresponding to the virtual object candidate having the highest virtual object candidate similarity with the object among the registered virtual object candidates.

<11> The information processing device according to <6>, in which

in the virtual object candidate database, a default value of an object effect that is an effect of the virtual object is further registered for each of the virtual object candidates, and
when the virtual space image generation unit converts the user and the person or the object into an avatar and a virtual object in a virtual space on the basis of the relationship and converts and generates the real space image into a virtual space image, the virtual space image generation unit adds the object effect based on the default value registered in association with the virtual object candidate identified as the virtual object to the virtual object.

<12> The information processing device according to <11>, further including

an object state extraction unit that extracts an object state that is a state of the object from the real space image, and
an object effect calculation unit that calculates the object effect from the default value and the object state, in which
the virtual space image generation unit adds the object effect calculated from a default value registered in association with the virtual object candidate identified as the virtual object and the object state to the virtual object.

<13> The information processing device according to <12>, in which
the object state is a degree of management indicating a state of management of the object.
<14> The information processing device according to <13>, in which

the degree of management is a value set from 0 to 100%, and
the object effect calculation unit calculates the object effect by multiplying the default value of the object effect by the degree of management.

<15> The information processing device according to <6>, in which

an item is further registered in the virtual object candidate database for each of the virtual object candidates, and
when the virtual space image generation unit converts the user and the person or the object into an avatar and a virtual object in a virtual space on the basis of the relationship and converts and generates the real space image into a virtual space image, the virtual space image generation unit adds the item registered in association with the virtual object candidate identified as the virtual object to the avatar.

<16> An information processing method including

extracting a relationship between a user in real space and a person or an object around the user from a real space image including the user and the person or the object, and

converting the user and the person or the object into an avatar and a virtual object in a virtual space on the basis of the relationship, and converting and generating the real space image into a virtual space image.

<17> A program for causing a computer to function as

a relationship extraction unit that extracts a relationship between a user in real space and a person or an object around the user from a real space image including the user and the person or the object, and
a virtual space image generation unit that converts the user and the person or the object into an avatar and a virtual object in a virtual space on the basis of the relationship, and converts and generates the real space image into a virtual space image.

REFERENCE SIGNS LIST

| | |
|---|---|
| 101 | Virtual space image display system |
| 131 | Imaging device |
| 132 | Virtual space display device |
| 133 | Network |
| 151 | Control unit |
| 171 | Display unit |
| 172 | Audio output unit |
| 181 | Virtual space person data |
| 182 | Virtual space object data |
| 191 | HOI detection unit |
| 192 | Virtual space image generation unit |
| 201 | Person posture extraction unit |
| 202 | Interaction extraction unit |
| 203 | Object area extraction unit |
| 211 | Object recognition detection unit |
| 212 | Object effect calculation unit |
| 213 | Similarity calculation unit |
| 214 | Object image generation unit |
| 215 | Person image generation unit |
| 216 | Image synthesis unit |

**Claims**

1. An information processing device comprising

a relationship extraction unit that extracts a relationship between a user in real space and a person or an object around the user from a real space image including the user and the person or the object, and
a virtual space image generation unit that converts the user and the person or the object into an avatar and a virtual object in a virtual space on a basis of the relationship, and converts and generates the real space image into a virtual space image.

2. The information processing device according to claim 1, wherein
the relationship is a motion of the user with respect to the person or the object.

3. The information processing device according to claim 2, wherein
the relationship is a direct motion of the user with respect to the person or the object.

4. The information processing device according to claim 2, wherein
the relationship is an indirect motion of the user with respect to the person or the object.

5. The information processing device according to claim 1, further comprising

   an object shape extraction unit that extracts an object shape that is a shape of the object included in the real space image, wherein
   the virtual space image generation unit converts the user and the person or the object into an avatar and a virtual object in the virtual space on a basis of the relationship and the object shape, and converts and generates the real space image into a virtual space image.

6. The information processing device according to claim 5, further comprising

   a virtual object candidate database in which a virtual object candidate to be a candidate of the virtual object into which the object is converted is registered in association with a relationship and an object shape set for each of the virtual object candidates, wherein
   the virtual space image generation unit converts the object into the virtual object corresponding to the virtual object candidate having the relationship and the object shape similar to those of the object among the virtual object candidates registered in the virtual object candidate database.

7. The information processing device according to claim 6, further comprising

   a similarity calculation unit that calculates, as a virtual object candidate similarity, a similarity with the relationship and the object shape of the object based on the relationship and the object shape set for each of the virtual object candidates registered in the virtual object candidate database, wherein
the virtual space image generation unit converts the object into the virtual object corresponding to the virtual object candidate having the highest virtual object candidate similarity with the object among the virtual object candidates registered in the virtual object candidate database.

8. The information processing device according to claim 7, wherein
the similarity calculation unit calculates the virtual object candidate similarity by a weighted product sum of a similarity of the relationship and a similarity of the object shape of each of the virtual object candidates registered in the virtual object candidate database.

9. The information processing device according to claim 7, wherein
the virtual space image generation unit converts the user and the person or the object into an avatar and a virtual object in the virtual space on a basis of a scene, the relationship, and the object shape, and converts and generates the real space image into a virtual space image.

10. The information processing device according to claim 9, wherein

    the virtual object candidate database includes a plurality of databases set according to the scene, and
    the virtual space image generation unit switches the plurality of databases forming the virtual object candidate database according to the scene, and converts the object into the virtual object corresponding to the virtual object candidate having the highest virtual object candidate similarity with the object among the registered virtual object candidates.

11. The information processing device according to claim 6, wherein

    in the virtual object candidate database, a default value of an object effect that is an effect of the virtual object is further registered for each of the virtual object candidates, and
    when the virtual space image generation unit converts the user and the person or the object into an avatar and a virtual object in a virtual space on a basis of the relationship and converts and generates the real space image into a virtual space image, the virtual space image generation unit adds the object effect based on the default value registered in association with the virtual object candidate identified as the virtual object to the virtual object.

**12.** The information processing device according to claim 11, further comprising

an object state extraction unit that extracts an object state that is a state of the object from the real space image, and
an object effect calculation unit that calculates the object effect from the default value and the object state, wherein
the virtual space image generation unit adds the object effect calculated from a default value registered in association with the virtual object candidate identified as the virtual object and the object state to the virtual object.

**13.** The information processing device according to claim 12, wherein
the object state is a degree of management indicating a state of management of the object.

**14.** The information processing device according to claim 13, wherein

the degree of management is a value set from 0 to 100%, and
the object effect calculation unit calculates the object effect by multiplying the default value of the object effect by the degree of management.

**15.** The information processing device according to claim 6, wherein

an item is further registered in the virtual object candidate database for each of the virtual object candidates, and
when the virtual space image generation unit converts the user and the person or the object into an avatar and a virtual object in a virtual space on a basis of the relationship and converts and generates the real space image into a virtual space image, the virtual space image generation unit adds the item registered in association with the virtual object candidate identified as the virtual object to the avatar.

**16.** An information processing method comprising

extracting a relationship between a user in real space and a person or an object around the user from a real space image including the user and the person or the object, and
converting the user and the person or the object into an avatar and a virtual object in a virtual space on a basis of the relationship, and converting and generating the real space image into a virtual space image.

**17.** A program for causing a computer to function as

a relationship extraction unit that extracts a relationship between a user in real space and a person or an object around the user from a real space image including the user and the person or the object, and
a virtual space image generation unit that converts the user and the person or the object into an avatar and a virtual object in a virtual space on a basis of the relationship, and converts and generates the real space image into a virtual space image.

## FIG. 1

VIRTUAL SPACE DISPLAY SYSTEM

11

31

IMAGING DEVICE

RP

REAL
SPACE IMAGE

32

INFORMATION PROCESSING UNIT

RP

REAL
SPACE IMAGE

VP

VIRTUAL
SPACE IMAGE

CONVERT

## FIG. 2

REAL SPACE IMAGE RP

VIRTUAL SPACE IMAGE VP

51R-1

52R-1

REAL OBJECT: LEATHER SHOE
INTERACTION: HOLD+SWING

51R-2

REAL OBJECT: LEATHER SHOES
INTERACTION: WEAR+SLIDE

52R-2-1

52R-2-2

CONVERT

51V-1

52V-1

VIRTUAL OBJECT: SWORD
INTERACTION: HOLD+SWING

51V-2

VIRTUAL OBJECT: SKATES
INTERACTION: WEAR+SLIDE

52V-2-1

52V-2

FIG. 3

# FIG. 4

REAL SPACE IMAGE RP

VIRTUAL SPACE IMAGE VP

51R-21

52R-21

REAL OBJECT: LEATHER SHOE
STATE: CLEAN, NEW

51R-22

REAL OBJECT: LEATHER SHOE
STATE: DIRTY, OLD

52R-22

CONVERT

51V-21

52V-21

VIRTUAL OBJECT: SWORD

EFFECT OF VIRTUAL OBJECT:
STRONG ATTACK POWER

51V-22

52V-22

VIRTUAL OBJECT: SWORD

EFFECT OF VIRTUAL OBJECT:
WEAK ATTACK POWER

EP 4 502 958 A1

# FIG. 5

REAL SPACE IMAGE RP

51R-31

REAL OBJECT: LEATHER SHOE

52R-31

51R-32

REAL OBJECT: LEATHER SHOE

52R-32

CONVERT

VIRTUAL SPACE IMAGE VP (SCENE: BATTLE)

52V-31

51V-31

VIRTUAL OBJECT: SWORD

VIRTUAL SPACE IMAGE VP (SCENE: SPORTS)

52V-32

51V-32

VIRTUAL OBJECT: BASEBALL BAT

EP 4 502 958 A1

## FIG. 6

REAL SPACE IMAGE RP — 51R-41A

51R-41C

C-KUN    A-SAN

CASE WHERE THERE
IS RELATIONSHIP
AMONG PERSONS

B-CHAN
— 51R-41B

·A-SAN HOLDS B-CHAN
·A-SAN HOLDS HANDS WITH C-KUN

51R-42A

A-SAN    D-SAN
— 51R-42D

52R-42

·A-SAN AND D-SAN FACE EACH OTHER
·A-SAN THROWS AN APPLE
·D-SAN CATCHES THE APPLE

CONVERT

VIRTUAL SPACE IMAGE VP — 51V-41A

51V-41C

C-KUN    A-SAN

DISPLAYED IN VIRTUAL
SPACE TOGETHER
WITH RELATED PERSONS

B-CHAN
— 51V-41B

·A-SAN HOLDS B-CHAN
·A-SAN HOLDS HANDS WITH C-KUN

51V-42A

A-SAN    D-SAN
— 51V-42D

52R-42

·A-SAN AND D-SAN FACE EACH OTHER
·A-SAN THROWS A BALL
·D-SAN CATCHES THE BALL

EP 4 502 958 A1

# FIG. 7

REAL SPACE IMAGE RP

52R-53
51R-51
52R-52
52R-51

CASE WHERE THERE IS RELATIONSHIP BETWEEN PERSON AND OBJECT OR OBJECTS

· A-SAN HAS A FORK
· AN APPLE IS PIERCED BY THE FORK HELD BY A-SAN
*A CLOCK ON A TABLE HAS NO RELATIONSHIP WITH THE REAL USER

CASE WHERE A PLURALITY OF OBJECTS IS RELATED TO ONE PERSON

51R-52
52R-54
52R-55

CONVERT

VIRTUAL SPACE IMAGE VP

51V-51

NOT ONLY OBJECT HAVING RELATIONSHIP WITH PERSON, BUT ALSO ANOTHER OBJECT HAVING RELATIONSHIP WITH THE OBJECT IS DISPLAYED IN VIRTUAL SPACE

FORK → KNITTING NEEDLES
APPLE → YARN

52V-52
52V-51

YARN CORRESPONDING TO APPLE, WHICH HAS NO RELATIONSHIP WITH PERSON IN REAL SPACE, IS ALSO DISPLAYED IN VIRTUAL SPACE

51V-52
52V-55
52V-54

ALL RELATED OBJECTS ARE DISPLAYED IN VIRTUAL SPACE

LEATHER SHOE → SWORD
FRYING PAN → SHIELD

EP 4 502 958 A1

## FIG. 8

REAL SPACE IMAGE RP

51R-61
52R-61
SCENE: BATTLE

REAL OBJECT:
LEATHER SHOE
INTERACTION:
HOLD +SWING
SHAPE:
VERTICALLY LONG

DETERMINE SCENE

CONVERT OBJECT

51R-62

REAL OBJECT:
LEATHER SHOES
INTERACTION:
HOLD +SWING
SHAPE:
VERTICALLY LONG

SCENE: SPORTS

52R-62-1

52R-62-2

VIRTUAL SPACE IMAGE VP

52V-61
51V-61

ITEM: HERO'S CAPE
51V-61
52V-71

52V-61
CONVERT AVATAR
52V-72

51V-62

51V-62
52V-62-1
52V-62-2

52R-62-1
52R-62-2

ITEM: GLOVE

EP 4 502 958 A1

## FIG. 9

REAL SPACE IMAGE RP → NETWORK (133) →

131

101

132

REAL SPACE IMAGE RP ⟹ CONVERT ⟹ VIRTUAL SPACE IMAGE VP

EP 4 502 958 A1

# FIG. 10

**VIRTUAL SPACE DISPLAY DEVICE** — 132

**CONTROL UNIT** — 191

**HOI DETECTION UNIT** — 191
- PERSON POSTURE EXTRACTION UNIT — 201
- INTERACTION EXTRACTION UNIT — 202
- OBJECT AREA EXTRACTION UNIT — 203

**OBJECT RECOGNITION DETECTION UNIT** — 211
- OBJECT SHAPE EXTRACTION UNIT — 221
- OBJECT STATE EXTRACTION UNIT — 222

**VIRTUAL SPACE IMAGE GENERATION UNIT** — 192
- OBJECT EFFECT CALCULATION UNIT — 212
- SIMILARITY CALCULATION UNIT — 213
- OBJECT IMAGE GENERATION UNIT — 214
- PERSON IMAGE GENERATION UNIT — 215
- IMAGE SYNTHESIS UNIT — 216

158

- INPUT UNIT — 152
- OUTPUT UNIT — 153
  - DISPLAY UNIT — 171
  - AUDIO OUTPUT UNIT — 172
- STORAGE UNIT — 154
  - VIRTUAL SPACE PERSON DATA — 181
  - VIRTUAL SPACE OBJECT DATA — 182
- COMMUNICATION UNIT — 155
- DRIVE — 156
  - REMOVABLE STORAGE MEDIUM — 157

## FIG. 11

# FIG. 12

251 · 251B · 252 · SCORE: 80%

# FIG. 13

251 · 252F · 252 · SCORE: 60%

## FIG. 14

251

252F

251

252

SCORE: 50%

251F

## FIG. 15

251

252

252F

251

252S

## FIG. 16

MANAGEMENT SCORE: 30%
(RELATIVELY POOR)

## FIG. 17

| OBJECT IN VIRTUAL SPACE | OBJECT ID | OBJECT IMAGE | OBJECT SHAPE | RELATIONSHIP (INTERACTION) | OBJECT EFFECT | ITEM |
|---|---|---|---|---|---|---|
| GOLF CLUB | 0 | | | HOLD/SWING | CARRY DISTANCE: 100 POINTS | GLOVE |
| TENNIS RACKET | 1 | | | HOLD/SWING | CARRY DISTANCE: 60 POINTS | TOWEL WRISTBAND |
| SOCCER BALL | 2 | | | KICK/THROW | CARRY DISTANCE: 70 POINTS | SPIKES |
| BASEBALL BAT | 3 | | | HOLD/SWING | CARRY DISTANCE: 80 POINTS | HELMET |

EP 4 502 958 A1

# FIG. 18

| OBJECT IN VIRTUAL SPACE | OBJECT ID | OBJECT IMAGE | OBJECT SHAPE | RELATIONSHIP (INTERACTION) | OBJECT EFFECT | ITEM |
|---|---|---|---|---|---|---|
| SABER | 10 | | | HOLD/SWING | ATTACK POWER: 100 POINTS | TURBAN |
| CLUB | 11 | | | HOLD/SWING | ATTACK POWER: 60 POINTS | MAKEUP OF BATTLE |
| SHIELD | 12 | | | HOLD | ATTACK POWER: 70 POINTS | PROTECTIVE TOOL FOR HEAD |
| SWORD | 13 | | | HOLD/SWING | ATTACK POWER: 80 POINTS | CAPE |

EP 4 502 958 A1

# FIG. 19

| OBJECT IN VIRTUAL SPACE | OBJECT ID (i) (N=4) | $S_{is}$ | $S_{ii}$ | $S_i$ (A = 0.6,B = 0.4) |
|---|---|---|---|---|
| GOLF CLUB | 0 | 0.7 | 0.8 | 0.74 |
| TENNIS RACKET | 1 | 0.6 | 0.8 | 0.68 |
| SOCCER BALL | 2 | 0.2 | 0.3 | 0.24 |
| BASEBALL BAT | 3 | 0.8 | 0.8 | 0.8 |

SORT IN DESCENDING ORDER

| OBJECT IN VIRTUAL SPACE | i (N=4) | $S_{is}$ | $S_{ii}$ | $S_i$ (A = 0.6,B = 0.4) |
|---|---|---|---|---|
| GOLF CLUB | 3 | 0.8 | 0.8 | 0.8 |
| TENNIS RACKET | 0 | 0.7 | 0.8 | 0.74 |
| SOCCER BALL | 1 | 0.6 | 0.8 | 0.68 |
| BASEBALL BAT | 2 | 0.2 | 0.3 | 0.24 |

# FIG. 20

REAL SPACE

VIRTUAL SPACE

SCENE: SPORTS
OBJECT NAME: BASEBALL BAT
DEFAULT OBJECT EFFECT: CARRY DISTANCE 80 POINTS
OBJECT EFFECT CALCULATION:
CARRY DISTANCE 80 POINTS×0.5＝CARRY DISTANCE 40 POINTS

OBJECT STATE:
DEGREE OF MANAGEMENT 50%

EP 4 502 958 A1

## FIG. 21

EP 4 502 958 A1

OBJECT STATE:
DEGREE OF MANAGEMENT 80%

SCENE: BATTLE
OBJECT NAME: SWORD
DEFAULT OBJECT EFFECT: ATTACK POWER 80 POINTS
OBJECT EFFECT CALCULATION:
ATTACK POWER 80 POINTS×0.8＝ATTACK POWER 64 POINTS

# FIG. 22

```
┌─────────────────────────────────────┐
│              START                   │
│  VIRTUAL SPACE DISPLAY PROCESSING    │
└─────────────────────────────────────┘
                  │
                  ▼                    S31
┌─────────────────────────────────────┐
│      RELATIONSHIP DETECTION          │
│           PROCESSING                 │
└─────────────────────────────────────┘
                  │
                  ▼                    S32
         DOES SCORE EXCEED              ──── No
      PREDETERMINED VALUE?
                  │
                 Yes
                  ▼                    S33
┌─────────────────────────────────────┐
│      VIRTUAL SPACE IMAGE             │
│      GENERATION PROCESSING           │
└─────────────────────────────────────┘
                  │
                  ▼
              ┌───────┐
              │  END  │
              └───────┘
```

# FIG. 23

START
RELATIONSHIP DETECTION PROCESSING

S51
ACQUIRE REAL SPACE IMAGE

S52
EXTRACT PERSON AREA AND SCORE

S53
EXTRACT OBJECT AREA AND SCORE

S54
EXTRACT RELATIONSHIP AND SCORE

RETURN

# FIG. 24

START
VIRTUAL SPACE IMAGE GENERATION PROCESSING

S71

INTEGRATE PERSON POSTURE AND PERSON IN VIRTUAL SPACE SELECTED BY USER AND GENERATE PERSON IMAGE IN VIRTUAL SPACE AS AVATAR

S72

EXTRACT OBJECT SHAPE IN OBJECT AREA AND SCORE

S73

EXTRACT OBJECT STATE IN OBJECT AREA AND SCORE

S74

CALCULATE SIMILARITY SCORE FOR EACH VIRTUAL SPACE OBJECT CANDIDATE

S75

SORT VIRTUAL SPACE OBJECT CANDIDATES IN DESCENDING ORDER OF SIMILARITY SCORE

S76

DETERMINE VIRTUAL SPACE OBJECT CANDIDATE HAVING HIGHEST SIMILARITY SCORE AS VIRTUAL SPACE OBJECT OF TARGET OBJECT, AND GENERATE CORRESPONDING OBJECT IMAGE

S77

CALCULATE EFFECT OF DETERMINED VIRTUAL SPACE OBJECT ON THE BASIS OF OBJECT STATE SCORE

S78

DETERMINE ITEM ADDED TO AVATAR ON THE BASIS OF DETERMINED VIRTUAL SPACE OBJECT AND GENERATE CORRESPONDING ITEM IMAGE

S79

SYNTHESIZE GENERATED AVATAR, IMAGE OF OBJECT INCLUDING ITEM, AND EFFECT INFORMATION, AND DISPLAY AS DISPLAY IMAGE

RETURN

# FIG. 25

EP 4 502 958 A1

**EP 4 502 958 A1**

## INTERNATIONAL SEARCH REPORT

| International application No. |
|---|
| **PCT/JP2023/009881** |

### A. CLASSIFICATION OF SUBJECT MATTER

*G06T 19/00*(2011.01)i; *A63F 13/52*(2014.01)i; *A63F 13/53*(2014.01)i; *A63F 13/655*(2014.01)i
FI:   G06T19/00 300B; A63F13/52; A63F13/53; A63F13/655

According to International Patent Classification (IPC) or to both national classification and IPC

### B. FIELDS SEARCHED

Minimum documentation searched (classification system followed by classification symbols)

G06T19/00; A63F13/52; A63F13/53; A63F13/655

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2016/111174 A1 (SONY CORP.) 14 July 2016 (2016-07-14) | 1-5, 16-17 |
|  | paragraphs [0018]-[0028], [0090]-[0091], fig. 5-6, 12 |  |
| A | paragraphs [0018]-[0028], [0090]-[0091], fig. 5-6, 12 | 6-15 |
| A | JP 2016-4519 A (BANDAI CO., LTD.) 12 January 2016 (2016-01-12) | 1-17 |
|  | paragraphs [0061]-[0075] |  |
| A | WO 2021/192686 A1 (SONY GROUP CORP.) 30 September 2021 (2021-09-30) | 1-17 |
|  | paragraph [0035], fig. 3 |  |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** |  |
|  | Telephone No. |

Form PCT/ISA/210 (second sheet) (January 2015)

## INTERNATIONAL SEARCH REPORT
### Information on patent family members

International application No.

**PCT/JP2023/009881**

| Patent document cited in search report | Publication date (day/month/year) | Patent family member(s) | Publication date (day/month/year) |
|---|---|---|---|
| WO 2016/111174 A1 | 14 July 2016 | US 2017/0309051 A1 paragraphs [0033]-[0043], [0105]-[0106], fig. 5-6, 12 <br> EP 3244372 A1 <br> CN 107004290 A | |
| JP 2016-4519 A | 12 January 2016 | (Family: none) | |
| WO 2021/192686 A1 | 30 September 2021 | (Family: none) | |

Form PCT/ISA/210 (patent family annex) (January 2015)

**REFERENCES CITED IN THE DESCRIPTION**

**Patent documents cited in the description**

- JP 2017199237 A